(19) Europäisches Patentamt / European Patent Office / Office européen des brevets

(11) **EP 3 900 141 B1**

(12) **EUROPÄISCHE PATENTSCHRIFT**

(45) Veröffentlichungstag und Bekanntmachung des Hinweises auf die Patenterteilung:
**22.06.2022  Patentblatt 2022/25**

(21) Anmeldenummer: **20702270.8**

(22) Anmeldetag: **27.01.2020**

(51) Internationale Patentklassifikation (IPC):
*H02J 3/06* *(2006.01)*

(52) Gemeinsame Patentklassifikation (CPC):
**H02J 3/06**

(86) Internationale Anmeldenummer:
**PCT/EP2020/051862**

(87) Internationale Veröffentlichungsnummer:
**WO 2020/160944 (13.08.2020 Gazette 2020/33)**

(54) **VERFAHREN UND ANLAGEN FÜR EIN AC-NETZ MIT ERHÖHTEM LEISTUNGSDURCHSATZ**

METHODS AND APPARATUS FOR AN AC NETWORK WITH INCREASED POWER THROUGHPUT

PROCÉDÉ ET DISPOSITIF POUR UN RÉSEAU À COURANT ALTERNATIF À DÉBIT DE PUISSANCE ACCRU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2019  EP 19156215**

(43) Veröffentlichungstag der Anmeldung:
**27.10.2021  Patentblatt 2021/43**

(73) Patentinhaber: **ReEnergy Holding AG**
**8853 Lachen (CH)**

(72) Erfinder: **STOEV, Alexander**
**8853 Lachen (CH)**

(74) Vertreter: **Felber, Josef et al**
**Felber & Partner AG**
**Dufourstrasse 116**
**8008 Zürich (CH)**

(56) Entgegenhaltungen:
**US-A- 1 363 707**

**Beschreibung**

Das Verfahren und die Anlage zu dessen Betrieb haben zum Ziel, die Leistung eines neu zu erstellenden oder bestehenden AC-Netzes durch Erhöhung der Übertragungsleistung um bis zu 25% zu erhöhen und die spezifischen Leitungsverluste von AC-Netzen, um bis zu 44% zu reduzieren. Die installierte Leistung der Anlagen, welche für die Anwendung des Verfahrens benötigt werden, sollen weniger als 1% bis 10% der Leistung des AC-Netzes betragen.

Die elektrische Energie wird in AC-Netzen mit sinusoidalen Phasenspannungen $U_{ac}$ und von den sinusoidalen nominalen Phasenströmen $I_{ac}$ übertragen. Die dafür benötigten Leiter werden als Erdkabel, welche vergraben werden, oder als Freileiter, welche von Masten getragen werden, ausgeführt. Der Phasenstrom und die Leitungsverluste sind durch den Leiterquerschnitt vorgegeben. Die Amplitude der nominalen Phasenspannung $U_{ac}$, welche am Ausgang der Netztrafos anliegt, ist gleich der Amplitude der Leiter-Erde Spannungen $U_{le}$, welche zwischen den Leitern des AC-Netzes und der Erde anliegen. Die Leiter-Erde Isolatoren sind für die Isolationsspannung $U_{lex}$ ausgelegt.

Die Amplitude der Phasenspannung $U_{ac}$ ist ebenfalls durch die Isolationsspannung $U_{lex}$ limitiert, da nach dem Stand der Technik die Amplituden der Phasenspannung $U_{ac}$ und die Amplitude der Leiter-Erde-Spannung $U_{le}$ gleich sind.

Die Leistung des AC-Netzes Pac, welche dem Produkt $I_{ac}*U_{ac}$ entspricht, ist durch den Querschnitt der Leiter und durch die Isolationsspannung $U_{lex}$ begrenzt. Die maximale nötige Isolationsspannung $U_{lex}$ bestimmt den Aufwand für die Isolation der Leiter, d.h. die Höhe der Masten und die Länge der Isolatoren bei Freileiternetzen bzw. die Dicke des Isolators und den Kabelquerschnitt der Kabel.

Es sind mehrere Verfahren bekannt, welche die Zeitflächen der Phasenspannungen bei gleichbleibender Amplitude erhöhen und dadurch mehr Leistung mit dem gleichen Strom und mit der gleichen Amplitude der Phasenspannung erzeugen. Bei allen Verfahren werden Vollwechselrichter (Voll-WR) verwendet, deren Leistung grösser oder gleich der Netzleistung Pac ist.

Zu dieser Kategorie von Verfahren gehören die Hochspannungs-Gleichstrom Übertragung (HVDC-Übertragung) und die Trapezmodulation. Bei der HVDC-Übertragung werden die AC-Ströme und AC-Spannungen von einem Voll-Wechselrichter (Voll-WR) in Gleichspannung bzw. DC-Spannung umgewandelt, übertragen und anschliessend von einem zweiten Voll-WR zu AC-Strömen und AC-Spannungen zurückgewandelt. Die Kosten eines Voll-WR sind hoch und hinzu kommen die Kosten der Sinus-Filter, die benötigt werden, um die Oberwellen der modulierten Ströme und Spannungen zu glätten. Die HVDC-Übertragung wird aus Kostengründen nur punktuell eingesetzt.

Es sind Versuche bekannt, hybride Netze mit Freileitern zu realisieren. Ein Teil der Freileiter sind mit AC-Spannungen und mit AC-Strömen, und der restliche Anteil der Freileiter sind mit DC-Spannungen und DC-Strömen belegt. Die Hybrid-Netze werden aus Kostengründen bisher nicht eingesetzt.

Die Trapezmodulation erzeugt trapezförmige Phasenspannungen $U_{ac}$ bzw. $U_{le}$. Die Trapezmodulation kann bis zu einer Vollblock-Modulation erweitert werden. Sowohl die trapezförmigen als auch die blockartigen Phasenspannungen sind nicht sinusoidal und weisen grössere Zeitflächen auf als die sinusoidalen Phasenspannungen mit der gleichen Amplitude. Diese Verfahren benötigen ebenfalls einen Voll-WR, was sehr aufwendig ist. Die Spannungs- und Strom-Oberwellen sind für eine AC-Energieübertragung unzulässig hoch. Daher wird die Trapez- oder Vollblock-Modulation meistens bloss bei Motorantrieben eingesetzt. Die dritte, neunte etc. Oberwelle der dreiphasigen Trapez- und Vollblock-Spannungen können nicht von den Netztrafos übertragen werden, deswegen werden diese Spannungen nicht für die Übertragung elektrischer Energie mit AC-Netzen angewendet und sind höchstens für lokale Inselversorgungen ohne AC-Netztrafos anwendbar.

Die sogenannte Supersinus-Modulation ändert die Phasenspannung und die Leiter-Erde Spannung. Ein Voll-WR moduliert aus einer DC-Spannung die sinusförmigen Phasenspannungen $U_{ac}$ und die dritte Oberwelle $U_3$ der Phasenspannung. Die $U_3$-Amplitude entspricht ca. 16% der $U_{ac}$-Amplitude, und ist gleich für alle Phasen. Die Amplitude der resultierenden Phasenspannung ist um 16% kleiner als die $U_{ac}$-Amplitude und wird Supersinus genannt. Ein Voll-WR kann aus der vorgegebenen DC-Spannung mit der Supersinus-Modulation eine 16% höhere verkettete Spannung $U_{ll}$ bzw. 16% mehr Leistung als mit einer Sinus-Modulation erzeugen. Der Netztrafo, welcher die AC-Spannungen in das AC-Netz einspeist, kann die $U_3$-Oberwelle der Phasenspannungen nicht transformieren. An den (sekundären) Netzspulen des Netztrafos erscheinen nur die sinusoidalen Phasenspannungen $U_{ac}$.

Die Supersinus-Modulation hat das Ziel, die installierte Voll-WR-Leistung bzw. die WR-Kosten zu reduzieren. Diese wird nicht mit dem Ziel angewendet, die Leistung des angeschlossenen AC-Netzes zu erhöhen und die Verluste der Netzleitungen zu reduzieren, so wie das mit dieser vorliegenden Erfindung angestrebt wird.

Aus diesem Grund wird die Netzspannung $U_{ac}$ am Ausgang der Netztrafos nicht auf einen höheren Wert transformiert, die Isolationsklasse der Netztrafos und derer Leistungsklasse bleiben unverändert, anders als beim vorgeschlagenen Verfahren. An den (sekundären) Netzspulen der Netztrafos und an den zugehörigen Leitungen, welche mit Hochspannung belegt sind und die Energie auf langen Distanzen übertragen, erscheinen keine hyper- oder super-sinusoidalen Leiter-Erde Spannungen, anders als beim hier vorgeschlagenen Verfahren.

Die Solar- und Windanlagen sind mit Voll-WR am Niederspannungs-AC-Netz angeschlossen. Die Voll-WR erzeugen eine dreiphasige supersinusoidale Spannung. Die installierte Leistung des Voll-Wechselrichters wird dabei um 16% reduziert. Die Spannungen, welche zum Mittelspannungsnetz transformiert werden, sind sinusoidal, denn die Netztrafos können supersinusoidale Spannungen nicht übertragen. Die Energie-Übertragung erfolgt auch bei diesen Anlagen mit den sinusoidalen $U_{le}$- und $U_{ac}$-Spannungen, entsprechend dem Stand der Technik.

Die bisher vorgestellten Verfahren zur Erhöhung der Zeitfläche der Netzspannungen haben den Nachteil, dass Voll-Wechselrichter eingesetzt werden und die Netztrafos diese Spannungen nicht transformieren können oder müssen, was unabdingbar für die EnergieÜbertragung mit AC-Netzen ist.

Insgesamt können folgende Dokumente als relevanter Stand der Technik angesehen werden:

- US-Patent 3,211,914, Oct. 1965
- Article IEE Transactions Vol. 32 No. 1, Feb. 2017, The Operation of Power Transmission
- Offenlegungsschrift 25 09 177, Aktenzeichen P 25 0 177.4
- US-Patent 3,970,914, July 10, 1976
- DE 000001238094 A
- US-Patent 1,363,707, Dec. 28, 1920

Im US-Patent 3,211,914 und im IEE Transactions Vol. 32 No. 1 Feb. 2017 «The Operation of Power Transmission» wird vorgeschlagen, die drei Spannungen $U_{le}$ eines dreiphasigen AC-Netzes mit der dritten Oberwelle $U_3$ der Phasenspannung zu überlagern. Dabei müssen die Netzspulen der Trafos in Y geschaltet sein, und ein zusätzlicher Generator ist zwischen dem Sternpunkt der Netzspulen und der Erde angeschlossen, um die $U_3$-Spannung einzuspeisen. Das Ergebnis ist eine supersinusoidale $U_{le}$-Spannung, welche eine um 11% kleinere Amplitude als die sinusoidale Phasenspannung $U_{ac}$ aufweist. Nach dem US-Patent 3,211,914 wird die Amplitude der $U_3$-Spannung auf ca. 25% der Phasenspannung $U_{ac}$ festgelegt. Dies erlaubt es, die $U_{ac}$- und $U_{le}$-Spannungen zu erhöhen, sodass der Maximalwert $U_{lex}$ der Leiter-Erde Spannung überschritten wird. Das resultierende Netz kann 11% mehr Netzleistung als das ursprüngliche AC-Netz übertragen.

Der Artikel IEE Transactions Vol. 32 No. 1, Feb. 2017 The Operation of Power *Transmission* legt die Grösse der $U_3$-Spannung auf 16% der Phasenspannung $U_{ac}$ fest, und die Amplitude der resultierenden $U_{le}$-Spannung soll sich dabei um ca. 16% verkleinern. Dies erlaubt es, die $U_{ac}$- und die $U_{le}$-Spannungen um 16% zu erhöhen, ohne dass der Maximalwert $U_{lex}$ der Isolatorspannung überschritten wird, um 16% mehr Energie zu übertragen.

In demselben Artikel wird nachgewiesen, dass der Abstand zwischen zwei $U_3$-Generatoren aufgrund der Phasenverschiebung der $U_3$-Spannung gegenüber der $U_{ac}$-Spannung begrenzt ist. Diese Phasenverschiebung vergrössert sich mit der Leiterlänge und erhöht die Leiter-Erde-Spannung $U_{le}$. Die Phasenspannung $U_{ac}$ und die Netzleistung müssen deswegen verringert werden. Aus diesem Grund ist die Länge der Leiter des $U_3$-Verfahrens nach dem Stand der Technik begrenzt. Die zulässigen Längen der Leiter zwischen zwei $U_3$-Generatoren betragen bei Freileiter-Netzen ca. 30-40 km und bei Erdkabel-Netzen ca. 3-4 km.

In der US-Patentschrift 1,363,707 wird ein Verfahren für die Übertragung einer Hauptleistung mit tiefer Netzfrequenz $F_1$ von ca. 25 Hz durch ein dreiphasiges AC-Netz zusammen mit einer hochfrequenten Hilfsleistung mit einer Frequenz höher als 40 Hz vorgestellt. Die Hauptleistung wird für die Traktion einer Bahn benötigt, die hochfrequente Hilfsleistung wird für die flickerfreie Beleuchtung benötigt. Sowohl die Haupt- als auch die Hilfsleistung sind Wirkleistungen. Zu diesem Zweck wird die Erweiterung des dreiphasigen AC-Netzes mit einem vierten Leiter (H) vorgeschlagen. Das Hauptmerkmal des Verfahrens nach dieser US-Patentschrift 1,363,707 ist ein dreiphasiges AC-Netz, welches mit einem vierten Leiter erweitert wird. Die drei niederfrequenten Hauptströme mit der Netzfrequenz $F_1$ fliessen zwischen den drei Phasenleitern des dreiphasigen AC-Netzes und übertragen die Hauptleistung, wie dies bei einem konventionellen AC-Netz der Fall ist. Ein einphasiger Strom mit der dreifachen Netzfrequenz überträgt die Hilfsleistung und fliesst zusätzlich durch den vierten Leiter und durch die drei Phasenleiter. Der vierte Leiter ist nötig, weil der einphasige Strom die Wirkleistung für die Speisung der Leuchten überträgt. Dieses Verfahren nach US-Patent 1,363,707 unterscheidet sich jedoch wesentlich sowohl in der Zielsetzung als auch in der Realisierung von dem vorliegenden Verfahren. US 1 363 707 A wird als nächstliegender Stand der Technik für das zu lösenden Probleme angesehen. Es offenbart ein Verfahren für die Steigerung der Leistung eines ein- bzw. mehr- phasigen AC-Netzes, welches mindestens einen einspeisenden Netztrafo mit Netzspulen und mindestens einen belastenden Netztrafo mit Netzspulen einschliesst, welche mit den Leitern verbunden sind und die nominalen sinusoidalen Phasenströme $I_{ac}$ mit der fundamentalen Netzfrequenz F1 leiten, wobei die Netzspulen mit den sinusoidalen Phasenspannungen $U_{ac}$ belegt sind und die Spannungen $U_{le}$, zwischen den Leitern und der Erde eine maximale Isolationsspannung $U_{lex}$ nicht überschreiten. Um eine Steigerung der Leistungsübertragung zu erzielen, schlägt die US 1 363 707 A vor, die Leistungssteigerung des AC-Netzes mittels einer Erhöhung der Wirkleistung zu erzielen, was durch Verwendung von Oberwellen-Generatoren geschieht. Dadurch erhöht sich die Stärke des Phasenstroms. Das Dokument gibt aber keinen Hinweis darauf, die Phasenspannung der Netztrafos zu erhöhen bei gleichzeitig gleichbleibendem Phasenstrom durch Verwendung von Oberwellen-Generatoren, die Blindleistung einspeisen. Weiterhin findet sich kein Hinweis in diesem Dokument, den Zusatzleiter wegzulassen.

Im Folgenden wird der Stand der Technik kritisch bewertet: Die maximale Steigerung der Netzleistung um 11%, welche mit dem Verfahren wie in US-Patent 3,211,914 beschrieben erzielt wird, ist gering. Da die $U_3$-Amplitude ca. 23% der Phasenspannung beträgt, ist der Aufwand für den Generator der $U_3$-Spanung, erheblich. Die maximale Steigerung der Netzleistung, welche mit dem $U_3$-Verfahren erzielt wird, ist mit 16% gering. Die Phasenverschiebung der $U_3$-Spannung reduziert diese Steigerung der Netzleistung. Die Anwendung des $U_3$-Verfahrens nach dem Stand der Technik ist eingeschränkt. Das $U_3$-Verfahren beschränkt sich auf dreiphasige AC-Netze mit Freileitern. Es ist nicht klar wie das $U_3$-Verfahren bei AC-Netzen mit Erdkabeln einzusetzen ist. Die Netzspulen müssen nach dem $U_3$-Verfahren in Y geschaltet werden. Es ist nicht klar, wie das $U_3$-Verfahren bei Netztrafos mit Δ-geschalteten Netzspulen einzusetzen ist. Mittelspannungs-Netze, welche ca. 40% der AC-Netze ausmachen, verwenden Netztrafos mit Δ-geschalteten Netzspulen.

Die $U_3$-Generatoren des $U_3$-Verfahrens müssen sich in der Nähe der Netztrafos befinden. Die Netztrafos befinden sich in der Regel in Trafo-Stationen, welche bis zu 100 km voneinander entfernt sind. Die maximalen Abstände zwischen zwei $U_3$-Generatoren sind aber aufgrund der Phasenverschiebungen auf ca. 30 km begrenzt.

Ein weiteres ungelöstes Problem bei der Umsetzung des $U_3$-Verfahrens mit Freileiter-Netzen sind die unkompensierten E-Felder, welche die $U_3$-Spannungen abstrahlen. Die E-Felder der drei Phasenspannungen eines dreiphasigen AC-Netzes kompensieren sich. Die E-Felder, welche durch die drei Leiter aufgrund der $U_3$ Komponente in der $U_{le}$ erzeugt werden, addieren sich hingegen zu einem grösseren $E_3$-Feld.

Das $U_3$-Verfahren sieht nicht vor, den Erdkurzschlussstrom, welcher bei einem Kurzschluss eines Leiters mit der Erde auftritt, mit der Hilfe des $U_3$-Generators zu löschen. Das $U_3$-Netz ist nicht redundant.

Das $U_3$-Verfahren sieht keine Transformation der dreiphasigen supersinusoidalen Spannungen vor, denn die konventionellen Netztrafos können die $U_3$-Spannungen, welche für alle drei Phasen gleich sind, nicht transformieren. Dies schränkt die Anwendung des $U_3$-Verfahrens stark ein.

Das Hauptziel des Verfahrens nach der vorliegenden Erfindung ist es, die Leistung und den Wirkungsgrad eines bestehenden oder neu geplanten AC-Netzes zu erhöhen, ohne Änderungen bzw. Ausbau der bestehenden Übertragungsstrecke, d.h. ohne Änderung der Anzahl und der Isolation der Netzleiter. Es wird, im Unterschied zur Lehre nach dem US-Patent 1,363,707, keine vierte Leitung benötigt, denn dies bedeutete einen teureren Ausbau des dreiphasigen AC-Netzes. Der vierte Leiter ist bei dreiphasigen AC-Netzen mit Freileitern oder mit Erdkabeln nicht vorhanden. Deswegen kann dieses Verfahren bei den meisten dreiphasigen AC-Netzen nicht eingesetzt werden. Nur bei AC-Netzen für Niederspannung wird manchmal ein Nullleiter (Erdleiter) für Schützzwecke ausgeführt und darf nicht hochfrequente Ströme führen.

## Aufgabe der Erfindung

Die Aufgabe der Erfindung ist es vor dem Hintergrund des oben diskutierten Standes der Technik, ein Verfahren zu schaffen, um die Leistung eines AC-Netzes zu erhöhen und die Leitungsverluste zu reduzieren. Es geht also darum, die Leistungsübertragung in dem AC-Netz zu erhöhen, dabei aber möglichst keinen elektrischen Smog entstehen zu lassen, und Verluste in den Leitern möglichst gering zu halten. Eine weitere Aufgabe besteht darin, eine Anlage anzugeben mit der dieses Verfahren durchführbar ist. Dazu sollen verschiedene Ausführungsvarianten des Verfahrens und der hierzu nötigen Anlagekomponenten angegeben werden, um das Verfahren sowohl bei neuen Installationen als auch bei bestehenden AC-Netzen ohne bzw. mit nur geringen Änderungen einzusetzen.

Das Ziel und somit ebenfalls die Aufgabe des Verfahrens ist es, ein AC-Netz so zu modifizieren, dass das modifizierte AC-Netz ca. 25% mehr Leistung mit ca. 44% weniger spezifischen Verlusten als das ursprüngliche AC-Netz zu übertragen vermag. Das nach dem Verfahren modifizierte bzw. erweiterte AC-Netz wird als HAC-Netz bezeichnet, mit H als Hinweis auf die generierte hypersinusoidale Phasenspannung. Das mit einem ursprünglichen AC-Netz vergleichbare HAC-Netz hat die gleiche Anzahl von Phasen, den gleichen Phasenstrom $I_{ac}$ und den gleichen maximalen Wert $U_{lex}$ der Isolatorspannung, wie das AC-Netz.

Ein weitere Aufgabe und ein weiteres Ziel besteht darin, das Verfahren bei AC-Netzen sowohl mit Freileitern als auch mit Erdkabeln zu realisieren. Eine weitere Aufgabe besteht darin, das Verfahren sowohl für Δ-Y Netztrafos als auch für Y-Δ Netztrafos anwendbar zu machen. Das Verfahren soll sowohl bei dreiphasigen als auch bei einphasigen AC-Netzen einsetzbar sein.

Ein bestehendes AC-Freileiternetz soll zu einem HAC-Freileiternetz umgerüstet werden können, ohne die bereits aufgestellten Masten, Freileiter und Isolatoren auszutauschen. Ein bestehendes AC-Kabelnetzes soll zu einem HAC-Kabelnetz umgerüstet werden können, ohne die bereits verlegten Kabel austauschen zu müssen.

Das Verfahren soll auch so erweitert werden können, dass die Regelung der Netzleistung ohne Regeltrafos möglich wird. Das Verfahren soll auch so erweitert werden können, dass die Löschung des Erdkurzschlussstromes bei einem Leiter-Erde Kurzschluss ohne den Einsatz von teuren Erdschlusslöschspulen möglich ist.

Im Weiteren soll das Verfahren eine redundante Übertragung der Energie ermöglichen, d.h. im Fehlerfall soll das HAC-Netz als ein AC-Netz betrieben werden können. Das Verfahren soll so ausgestaltet werden, dass die abgestrahlten elektrischen und magnetischen Felder reduziert werden. Weiter soll das Verfahren über beliebige Distanzen zwischen den Netztrafos realisiert werden können. Es soll auch der Transformator definiert werden, welcher die Spannungen des HAC-Netzes übertragen kann.

Ein weitere Aufgabe und ein Ziel der Erfindung besteht darin, eine Anlage zu definieren, welche eine kostengünstige Anwendung des Verfahren für die Energieübertragung von regenerativen Energiequellen (Solarenergie und Windenergie) und von Energiespeichern ermöglicht.

**Lösung gemäss Erfindung**

Die Lösung der technischen Aufgabe besteht in einem Verfahren nach den Merkmalen des Patentanspruchs 1. Teilaufgaben werden von den Verfahren gemäss der abhängigen Ansprüche 2 bis 9, gelöst. Die Verfahren sind umsetzbar mit Anlagen nach den Ansprüchen 10 bis 15.

Das Verfahren nach dieser Erfindung unterscheidet sich von der Trapez- und Vollblock-Modulation, welche die Phasenspannungen $U_{ac}$ modifizieren, in folgenden Punkten:

• Die Phasenspannungen $U_{hac}$ bleiben sinusförmig,
• es wird nur die $U_{le}$-Spannungsform modifiziert, und
• die Leistungen der benötigten Wechselrichter sind viel kleiner als die Netzleistung.

Die Oberwellen-Generatoren gemäss Erfindung liefern, im Unterschied etwa zum US-Patent 1,363,707 nur Blindleistungen. Die Oberwellenströme und deren Verluste sind mindestens einer Grössenordnung kleiner als die Oberwellenströme und deren Verluste nach dem Verfahren gemäss US-Patent 1,363,707.

Anhand der Figuren wird die Grundproblematik aufgezeigt, und verschiedene Varianten von Blockschaltbildern und Komponenten für die Umsetzung des Verfahrens werden dargestellt. Nachfolgend werden diese im Einzelnen beschrieben und erklärt. Das Gleiche gilt auch für die Anlagen zur Umsetzung der Verfahren.

Es zeigt:

Figur 1:  Das Blockschaltbild eines AC-Netzes nach dem Stand der Technik;

Figur 2:  Je eine Spannung $U_{hle}$, $U_{hac}$, $\Delta U$ des HAC-Netzes und die zugehörigen Spannungen $U_{le}$ und $U_{ac}$ des ursprünglichen AC-Netzes, sowie der zugehörige Phasenstrom $I_{ac}$;

Figur 3:  Das Blockschaltbild eines HAC-Netzes mit $\Delta$-Generatoren;

Figur 4:  Das Blockschaltbild eines dreiphasigen HAC-Netzes mit $H_3$- und $S_1$-Generatoren;

Figur 5:  Das Blockschaltbild eines dreiphasigen HAC-Netzes mit $H_3$- und $S_3$-Generatoren;

Figur 6:  Den prinzipiellen Aufbau eines $\Delta$-Generators;

Figur 7:  Die Erweiterung der $\Delta$-geschalteten Spulen eines Netztrafos mit einem Erdungstrafo und mit einem $S_1$-Generator;

Figur 8:  Den Aufbau eines $S_3$-Generators für dreiphasige Netze;

Figur 9:  Das Blockschaltbild eines einphasigen HAC-Netzes;

Figur 10:  Das Blockschaltbild eines redundanten HAC-Netzes;

Figur 11:  Den Querschnitt eines dreiadrigen Erdkabels, geeignet für den Einsatz in dreiphasigen HAC-Netzen;

Figur 12:  Einen Freileitermast mit zwei dreiphasigen Systemen mit reduzierten elektrischen und magnetischen Streufeldern;

Figur 13:  Den Aufbau eines dreiphasigen Y-$\Delta$ HAC-Netztrafos;

Figur 14:  Das Blockschaltbild eines HAC-Netzes mit einem vorhandenen Voll-Wechselrichter;

Figur 15:  Die Anbindung eines HAC Synchrongenerators an ein HAC-Netz;

Figur 16:  Das Blockschaltbild einer Anlage für die Kopplung eines AC-Netzes mit einem HAC-Netz mit Y geschalteten Netzspulen des Netztrafos;

Figur 17:  Das Blockschaltbild einer Anlage für die Kopplung eines dreiphasigen AC-Netzes mit einem HAC-Netz mithilfe eines dreiphasigen Spartrafos.

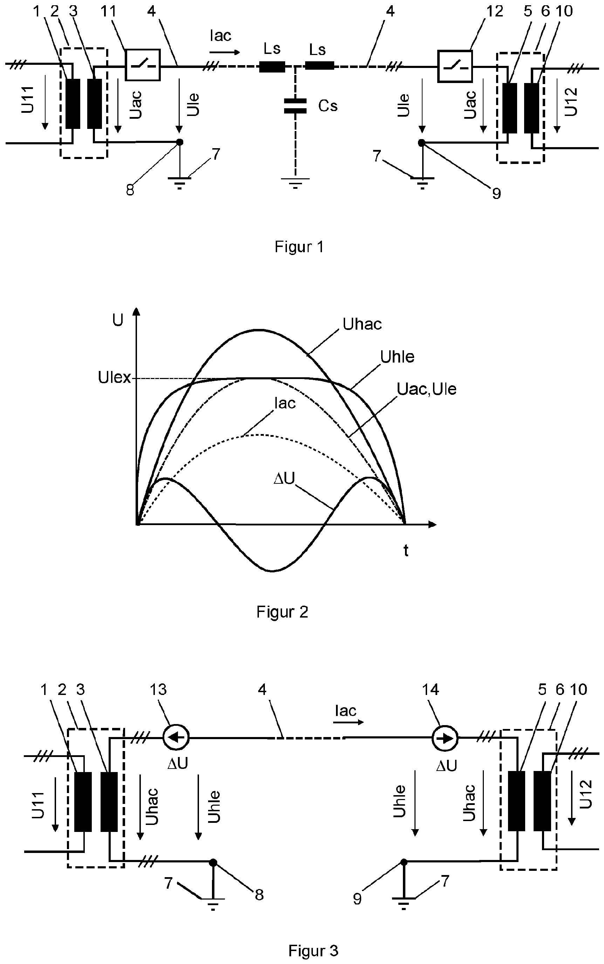

Um den Stand der Technik weiter verständlich zu machen, wird zunächst der Aufbau eines konventionellen AC-Netzes aufgezeigt, wie es in der Figur 1 dargestellt ist. Ein AC-Netz besteht aus den Netztransformatoren 2 bzw. 6 (weiterhin Netztrafos genannt) und aus den Leitern 4, welche die Netztrafos verbinden. Die elektrische Energie wird von sinusoidalen Phasenspannungen $U_{ac}$ und Phasenströmen $I_{ac}$ übertragen. Die industriellen AC-Netze sind dreiphasig. Die Niederspannungs-Netze und die AC-Netze für elektrische Bahnen sind meistens einphasig. Die Netzfrequenz $F_1$ der Phasenspannungen ist vorgegeben und beträgt bei Industrienetzen 50 Hz bzw. 60 Hz, bei Bahnnetzen 16 2/3 Hz. Die Phasenströme $I_{ac}$ und Phasenspannungen $U_{ac}$ sind sinusoidal, der Anteil der zugelassenen Spannungs- und Strom-Oberwellen ist durch Normen auf unter 3% begrenzt. Auch die Amplitude der durch die Leiter abgestrahlten magnetischen und elektrischen Felder ist durch Normen limitiert.

Die Eingangsspulen bzw. die Ausgangsspulen eines dreiphasigen Netztrafos sind entweder im Dreieck (Δ) oder in Sternform (Y) geschaltet. Bei den Δ-Y Netztrafos sind die Eingangsspulen in Δ und die Ausgangsspulen in Y geschaltet. Die Y-Δ Trafos bestehen aus Y-geschalteten Eingangsspulen und Δ-geschalteten Ausgangsspulen. Der Sternpunkt 8 der Y- geschalteten Spulen ist meistens direkt mit der Erde 7 verbunden (geerdet). Die Δgeschalteten Spulen sind in der Regel nicht geerdet.

Die Eingangsspulen 1 bzw. 10 des Netztrafos 2 bzw. 6 sind mit den tieferen Eingangsspannungen $U_{11}$ bzw. $U_{12}$ belegt. Die Ausgangsspulen 3 bzw. 5 werden hier als Netzspulen bezeichnet und sind mit Hochspannungen belegt. Jede Netzspule 3 bzw. 5 liefert eine Phasenspannung $U_{ac}$ und ist über die Netzschalter 11 bzw. 12 mit den zugehörigen Leiter 4 verbunden, wie in Figur 1 gezeigt.

Die Spannung $U_{ac}$ einer Phase wird zwischen den Anschlüssen der Netzspulen gemessen. Die Phasenspannung einer Y-geschalteten Netzspule $U_{le}$ wird zwischen dem Ausgang dieser Netzspule 3 und dem Sternanschluss 8 gemessen. Die Phasenspannung bei Netztrafos mit Δ-geschalteten Netzspulen liegt zwischen dem Ausgang der Netzspule und einem virtuellen Sternpunkt an.

Der maximale Wert $U_{lex}$ der Spannung zwischen einem Leiter 4 und der Erde 7 definiert die maximale Isolationsspannung des Leiters zur Erde. Die Leiter-Erde Spannungen $U_{le}$ eines AC-Netzes sind nach dem Stand der Technik gleich der Phasenspannungen $U_{ac}$ dieses Netzes.

Die Spannung, welche zwischen zwei Leitern anliegt, wird Leiter-Leiter bzw. verkettete Spannung $U_{ll}$ genannt. Die AC-Energieübertragung erfolgt mit hohen Spannungen mit folgenden Kategorien von Werten der Leiter-Leiter Spannungen:

- Super-Hochspannungen (SHS) > 110 kV,
- Hochspannungen (HS) > 50 kV und
- Mittelspannungen (MS) > 1kV.

Je höher die Spannung, desto mehr Leistung wird vom AC-Netz übertragen.

Der Maximalwert $U_{lex}$ der Isolatorspannung prägt die Kosten einer AC-Installation. Je höher die Netzspannungen, desto grösser und teurer ist der Isolationsaufwand. Die Amplitude der Leiter-Erde Spannung $U_{le}$ und die Amplitude der gleichwertigen Phasenspannung $U_{ac}$ sind zwingend kleiner als der Maximalwert $U_{lex}$:

$$max(U_{le}) = max(U_{ac}) < U_{lex}$$

Wenn der Maximalwert $U_{lex}$ überschritten wird, bricht die Leiterisolation durch und der Isolator um die Leiter wird vorübergehend oder permanent beschädigt. Isolationswächter überwachen die maximale Leiter-Erde Spannung und schalten das AC-Netz ab, wenn der Maximalwert $U_{lex}$ überschritten wird.

Die Phasenspannungen und die Phasenströme der Freileiter strahlen elektrische Felder (E-Felder) und magnetische Felder (B-Felder) ab. Die maximalen Werte dieser unerwünschten E- und B-Felder sind durch Normen limitiert. Das $U_{le}$-Spektrum ist hingegen nicht vorgeschrieben. Bei AC-Freileiternetzen sind die Maximalwerte der $U_{le}$-Oberwellen vorgeschrieben. Bei Erdkabelnetzen sind die Maximalwerte der $U_{le}$-Oberwellen nicht relevant, da die Leiter abgeschirmt sind.

Die Leiter 4 sind durch verteilte Induktivitäten $L_s$ und durch verteilte Kapazitäten $C_s$ gegenüber der Erde gekennzeichnet - wie in Figur 1 aufgezeigt. Sowohl die Phasenspannungen $U_{ac}$ als auch die Oberwellen der Netzspannungen erzeugen kapazitive Ausgleichsströme.

Die Richtung der Energieübertragung wird durch die Differenz der Phasenspannungen $U_{ac}$ der einspeisenden Trafos 2 und der belastenden Trafos 6, sowie durch die Impedanz der verbindenden Leitungen 4 bestimmt. Die einspeisende Phasenspannung des Netztrafos 2 ist höher als die belastende Phasenspannung des Netztrafos 5. Damit werden die Spannungsabfälle über die Leitungsimpedanzen der verbindenden Leitungen kompensiert, wobei die Spannungsdifferenz im Prozentbereich der $U_{ac}$-Spannung liegt. Je grösser diese Differenz ist, desto mehr Strom $I_{ac}$ fliesst durch die Leitungen 4, bzw. desto mehr Leistung wird übertragen. Die Phasenlagen der $U_{ac}$-Spannungen der einspeisenden Netztrafos 2 und der belastenden Netztrafos 6 unterscheiden sich geringfügig voneinander.

Die Leistung eines Netztrafos - sowohl die Wirkleistung als auch die Blindleistung - wird oft geregelt. Der Regelbedarf steigt mit dem Einsatz von regenerativen Quellen. Die Regelung der Leistung eines Netztrafos erfolgt mit einem zusätzlichen Regel-Transformator (hier Regeltrafo genannt), welcher die Amplituden und die Phasen der Phasenspannungen des Netztrafos variiert, indem die variablen Regelspannungen $U_r$ zu den Phasenspannungen eingekoppelt und damit zu diesen addiert werden. Die Regelspannung $U_r$ ist in den meisten Anwendungen nach dem Stand der Technik kleiner als 10% der Phasenspannung $U_{ac}$. Die Regelspannung wird nach dem Stand der Technik mit Stufenschaltern verändert, was langsam und ungenau erfolgt.

Die häufigste Fehlerquelle beim Betrieb eines AC-Netzes ist der Kurzschluss eines Leiters mit der Erde. Bei einem Erdkurzschluss fliessen grosse Erdkurzschlussströme. In diesem Fall steigt der maximale Wert der Leiter-Erde Spannung $U_{le}$ von nichtgeerdeten drei-

phasigen AC-Netzen (Mittelspannungs-Netze) auf das 1.71-fache der Phasenspannung $U_{ac}$. Der Erdkurzschlussstrom wird mit einer Erdschlusslöschspule (Petersenspule) gelöscht. Die Petersenspule weist eine variable Induktivität auf und ist aufwendig im Aufbau.

Vor diesem ganzen dargestellten Hintergrund ist es das Ziel dieser Erfindung, mittels Einführung sogenannter hypersinusoidalen Spannungen $U_{hle}$ zwischen den Leitern und der Erde die sinusoidalen Spannungen zwischen den Leitern und der Erde $U_{le}$ zu ersetzen. Die hypersinusoidalen Leiter-Erde Spannungen $U_{hle}$ werden aus den höheren Phasenspannungen $U_{hac}$ durch die Ein- bzw. Auskopplung von hochfrequenten Differenzspannungen $\Delta U$ abgeleitet.

Eine hypersinusoidale Leiter-Erde Spannung $U_{hle}$ ist «breiter» als die sinusoidale Leiter-Erde Spannung $U_{le}$, bei gleicher Amplitude beider Spannungen, welche die Isolationsspannung $U_{lex}$ erfindungsgemäss nicht überschreiten darf, wie das anhand von Figur 2 illustriert ist.

Die hypersinusoidale Leiter-Erde Spannung $U_{hle}$ eines HAC-Netzes hat erfindungsgemäss die Spannungszeitfläche der zugehörigen Phasenspannungen $U_{hac}$ und eine Amplitude, welche kleiner gleich der Isolationsspannung $U_{lex}$ bzw. kleiner als die Amplitude der Phasenspannung $U_{hac}$ ist. Mit anderen Worten ist die Amplitude der Phasenspannungen $U_{hac}$ eines HAC-Netzes grösser als die Amplitude der Leiter-Erde Spannung $U_{hle}$ dieses Netzes und grösser als die Isolationsspannung $U_{lex}$. Erfindungsgemäss ist die Amplitude der Phasenspannung $U_{hac}$ maximal $(1-\pi/2) \sim 57\%$ höher als die $U_{hle}$-Amplitude bzw. als die Isolationsspannung $U_{lex}$. Die Erhöhung der Phasenspannung $U_{hac}$ und die resultierende höhere Leistung $P_{hac}$ des HAC-Netzes wird aus technischen Gründen auf ca. 25% reduziert. Die Leistungssteigerung erfolgt dabei unverändert mit dem nominalen Phasenstrom $I_{ac}$. D.h. die ohmschen Übertragungsverluste der Leiter bleiben unverändert.

Der Verlustleistung, bezogen auf die höhere HAC-Netzleistung (d.h. die spezifischen Leitungsverluste) reduzieren sich um ca. 25%.

Für die Übertragung der nominalen AC-Leistung Pac mit der höheren $U_{hac}$-Spannung benötigt man 25% weniger Strom. Die spezifischen Leitungsverluste reduzieren sich in diesem Fall quadratisch mit dem Strom um 44%. Die Leiter-Erde Isolatorspannung $L_{lex}$ und der Nominalstrom $I_{ac}$ bleiben dabei gleich, so dass das Verfahren bei einem vorhandenen AC-Netz mit Freileitern und/oder mit Kabeln eingesetzt werden kann, ohne Änderungen der Übertragungsstrecke. Allerdings muss die Isolationsklasse der Netztrafos für die höhere Phasenspannung $U_{hac}$ angepasst werden sowie die Nennleistung um bis zu 25% erhöht werden.

Die Phasenspannungen $U_{hac}$ und die Phasenströme $I_{ac}$ des HAC-Netzes bleiben sinusoidal. Dadurch wird gewährleistet, dass die Normen, welche den Oberwellengehalt der Phasenspannungen und der Phasenströme begrenzen, erfüllt bleiben. Die magnetische Strahlung (Smog), welche von den unveränderten Phasenströmen $I_{ac}$ erzeugt wird, bleibt ebenfalls unverändert. Mit den höheren sinusoidalen Phasenspannungen $U_{hac}$ wird die höhere Netzleistung $P_{hac}$ mit den nominalen Phasenströmen $I_{ac}$ bei gleichbleibenden Durchleitungsverlusten übertragen. Es soll auch ein Verfahren aufgezeigt werden, welches die Erzeugung und die Anwendung dieser hypersinusoidalen Spannungen ermöglicht. Die installierte Leistung der Anlagen, welche die hypersinusoidalen Spannungen erzeugen, soll 10- bis 100-mal kleiner als die Netzleistung sein. Daraus folgt, dass die Kosten dieser Anlagen viel kleiner sind als die Kosten der Netzinstallation.

Das vorgestellte Verfahren wird im Wesentlichen durch zwei Massnahmen umgesetzt:

> a) durch die Einkopplung einer geeigneten Differenzspannung $\Delta U$ zwischen den Leitern des AC-Netzes und der Netzspule wird die resultierende hypersinusoidale Leiter-Erde Spannung $U_{hle}$ um bis zu $2/\pi \sim 64\%$ erhöht, als maximaler Wert der Isolationsspannung $U_{lex}$
> b) dadurch wird ermöglicht, die Phasenspannung am Ausgang der Netzspulen um maximal $\pi/2 \sim$ um 157% auf den Wert $U_{hac}$ zu erhöhen. Die $U_{hle}$-Spannungen steigen proportional zu den Phasenspannungen $U_{hac}$, bleiben aber kleiner oder gleich dem Isolationswert $U_{lex}$.

Die $\Delta U$-Spannungen werden von sogenannten $\Delta$-Generatoren erzeugt und bestehen aus Oberwellen der zugehörigen Phasenspannungen $U_{hac}$.

Mit den höheren sinusoidalen Phasenspannungen $U_{hac}$ wird, zusammen mit dem nominalen sinusoidalen Phasenstrom $I_{ac}$, eine um bis zu 57% bzw. um den Faktor 157% höhere Netzleistung übertragen. Die überwiegend ohmschen Durchleitungsverluste bleiben unverändert. Da die maximale Leiter-Erde Spannung $U_{lex}$ nicht überschritten wird, kann das modifizierte Netz mit existierenden AC-Trassen betrieben werden, da die Leiter-Erde Isolatoren unverändert bleiben können. Die Übertragung erfolgt wie beim AC-Netz mit den sinusoidalen Phasenströmen $I_{ac}$ und mit den sinusoidalen Phasenspannungen $U_{hac}$, d.h. oberwellenfrei. Nur das Bezugspotential der Leiter zur Erde ist hypersinusoidal und oberwellenbehaftet.

Die Figur 1 zeigt das Blockschaltbild eines dreiphasigen AC-Netzes entsprechend dem Stand der Technik. Die dreiphasigen Netztrafos 2 bzw. 6 bestehen aus den Eingangsspulen 1 bzw. 10 und aus den Netzspulen 3 bzw. 5. An den Eingangsspulen 1 bzw. 10 liegen drei sinusoidalen Eingangsspannungen $U_{11}$, $U_{12}$ an. Die drei Netzspulen 3, 5 sind in der Regel in Y geschaltet, die drei Eingangsspulen 1, 10 sind in der Regel in $\Delta$ geschaltet. Die Sternanschlüsse 8 bzw. 9 der Netzspulen 3 bzw. 5 sind mit der Erde 7 verbunden. Die Netzschalter 11, 12 trennen bei Bedarf die Netzspulen 3 bzw. 5. von den Leitern 4. Die Leiter 4 sind durch die verteilten Induktivitäten $L_s$ und durch die verteilten Kapazitäten $C_s$ gekennzeichnet. Die drei sinusoidalen Phasenspannungen $U_{ac}$ an den Ausgängen der Netzspulen 3 bzw. 5 des dreiphasigen AC-Netzes sind gleich den drei Spannungen $U_{le}$, welche zwischen den Leitern 4 und der Erde 7 anliegen, wie in Figur 2 illustriert. Die drei sinusoidalen $U_{le}$-Spannungen sind immer kleiner als der Wert $U_{lex}$. Die gleichen Verhältnisse gelten auch bei einem einphasigen AC-Netz:

$$U_{ac} = U_{le} \leq Ul_{ex}$$

Das Verfahren nach Anspruch 1 verlangt nun erstmals, dass die Übersetzungsverhältnisse aller Netztrafos 2, 6 erhöht werden, wodurch die Amplituden der sinusoidalen Phasenspannungen $U_{hac}$ grösser als die Amplituden der $U_{ac}$-Spannungen bzw. grösser als der Isolationswert $U_{lex}$ werden:

$$U_{hac} > U_{lex} > U_{ac}$$

Die Netzspulen 3 bzw. 5, welche die $U_{hac}$-Spannungen liefern, können nicht direkt an die Leiter 4 angeschlossen werden, denn die $U_{hac}$-Amplitude ist höher als der maximale $U_{lex}$-Wert, d.h. die Leiter-Erde Isolatoren könnten sonst durchschlagen.

Erfindungsgemäss wird wie in Figur 3 dargestellt jedem Netztrafo 2 bzw. 6 je ein $\Delta$-Generator 13 bzw. 14 zugeordnet, welcher zwischen je einer Netzspule 3 bzw. 5 der Netztrafos und dem zugehörigen Leiter 4 angeschlossen ist. Die Phasenanzahl der $\Delta$-Generatoren 13 bzw. 14 entspricht der Phasenanzahl des zugehörigen Netztrafos.

Die $\Delta$-Generatoren 13, welche mit den einspeisenden Netztrafos 2 verbunden sind, koppeln (addieren) die Differenzspannungen $\Delta U$ zu den $U_{hac}$-Spannungen der zugehörigen Netzspulen 3 ein und erzeugen zwischen den Leitern 4 und der Erde 7 die Spannungen $U_{hle}$ Ein Vergleich mit den Graphen der Figur 2 ist hierzu aufschlussreich.

Die $\Delta$-Generatoren 14, welche mit den belastenden Netztrafos, z.B. 6, verbunden sind, koppeln (subtrahieren) die Differenzspannungen $\Delta U$ von den $U_{hle}$-Spannungen der zugehörigen Leiter 4 aus, so dass an den Netzspulen 5 der belastenden Netztrafos 6 nur die sinusoidale Spannung $U_{hac}$ anliegt, wie anhand von Figur 2 und 3 gezeigt.

Die Phasen und die Amplituden der $\Delta U$-Spannungen sind dabei so gewählt, dass die Amplituden der resultierenden Spannungen $U_{hle}$, welche zwischen den Leitern 4 und der Erde 7 anliegen, kleiner als der Spannungswert $U_{lex}$ sind, wie anhand von Figur 2 verständlich. Das HAC-Netz ist durch die hypersinusoidalen Leiter-Erde Spannungen $U_{hle}$ gekennzeichnet.

Die eingekoppelten $\Delta U$-Spannungen reduzieren die Amplituden der $U_{hle}$-Spannungen unter den zugelassenen Spannungswert $U_{lex}$ des ursprünglichen AC-Netzes. Dadurch wird möglich, dass man die Leiter 4 der Netztrasse des ursprünglichen AC-Netzes mit den Netzspulen 3 bzw. 5 der Netztrafos 2 bzw. 6 verbindet, obwohl die Phasenspannungen $U_{hac}$ an den Netzspulen grösser als die nominalen Spannungen $U_{ac}$ des AC-Netzes sind! Mit nominell gleichbleibendem Phasenstrom $I_{ac}$ überträgt das HAC-Netz demzufolge eine höhere Leistung $P_{hac}$. Jeder Spannung $U_{le}$ bzw. $U_{ac}$ ist eine $\Delta U$-Spannung zugeordnet, d.h. ein einphasiges Netz hat eine $\Delta U$-Spannung, ein dreiphasiges Netz hat drei $\Delta U$-Spannungen, welche den drei Phasen zugeordnet sind.

Sowohl die einspeisenden Netztrafos 2, welche aus den Eingangsspannungen $U_{11}$ die höheren Phasenspannungen $U_{hac}$ ins HAC-Netz einspeisen, als auch die belastenden Netztrafos 6, welche die $U_{hac}$-Spannungen zu den $U_{12}$-Spannungen transformieren, müssen eine grössere Übersetzung und eine höhere Isolation gegenüber der Erde aufweisen, sowie für die höhere HAC-Leistung $P_{hac}$ ausgelegt werden. Die Netztrafos des ursprünglichen AC-Netzes sind für die kleinere (nominale) Leistung $P_{ac}$ ausgelegt.

Jede supersinusoidale Spannung $U_{hle}$, welche zwischen einem Leiter 4 und der Erde 7 des HAC-Netzes anliegt, entspricht der Summe einer Phasenspannung $U_{hac}$ mit der zugehörigen Spannung $\Delta U$, wie das in einer Anordnung nach Figur 3 der Fall ist und aus Figur 2 ersichtlich ist.

$$U_{hle} = U_{le} + \Delta U$$

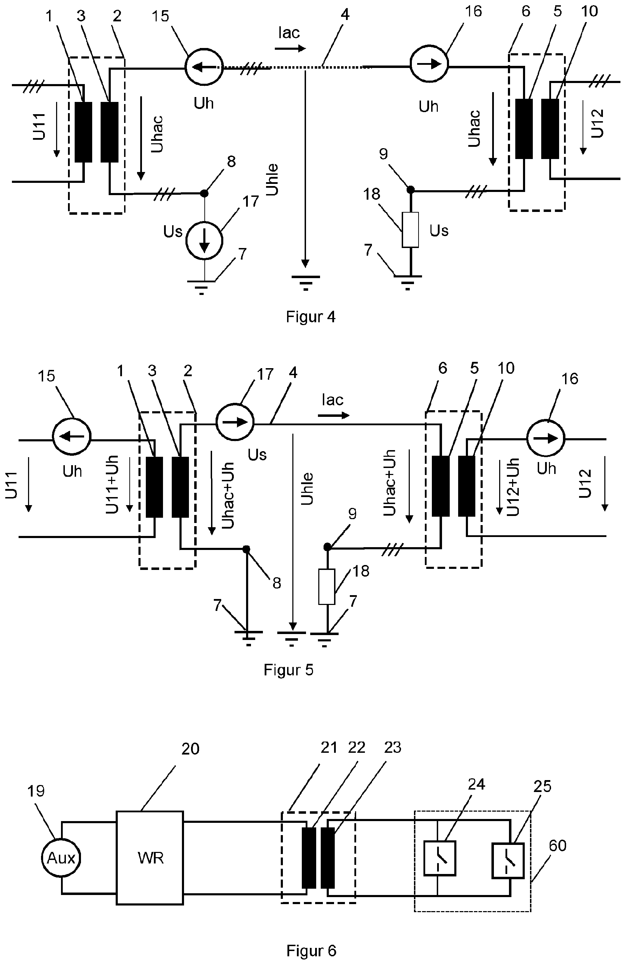

Die je zwei $\Delta U$-Spannungen jedes geschlossenen Phasenkreises in einer Anordnung nach Figur 3 mit einem einspeisenden Netztrafo 2 und mit einem belastenden Netztrafo 6 sind entgegengesetzt und heben sich gegenseitig auf. Dies gilt auch dann, wenn die Richtung der Energieübertragung zwischen dem belastenden und dem einspeisenden Trafo wechselt. Demzufolge erzeugt eine sinusoidale Spannung $U_{hac}$ am Ausgang der Netzspulen 3 eines einspeisenden Netztrafos 2 einer Anordnung nach Figur 5 eine sinusoidale Ausgangsspannung $U_{12}$ an den Ausgangsspulen 10 des belastenden Netztrafo 6. Die Spannungsdifferenz zwischen je zwei miteinander verbundenen Netzspulen 3 bzw. 5, welche den Phasenstrom $I_{ac}$ durch den Leiter 4 treibt, ist sinusoidal, denn die zwei entgegengerichteten $\Delta U$-Spannungen der $\Delta$-Generatoren 13 bzw. 14 kompensieren sich gegenseitig. Deswegen bleibt der Phasenstrom $I_{ac}$ sinusoidal.

Die Verluste, die Phasenverschiebungen und die Leiterimpedanzen entlang der realen Leiterstrecke verändern die Amplitude und die Phase der Spannungen $U_{hac}$ geringfügig. Die ohmschen Spannungsabfälle werden nach dem Stand der Technik bei der Auslegung der Netztrafos 2 bzw. 6 oder mit einem Regeltrafo kompensiert. Phasenverschiebungen der $\Delta U$-Spannungen entlang der Strecke werden durch die $\Delta$-Generatoren 13

bzw. 14 kompensiert.

Jede $\Delta U$-Spannung besteht aus Oberwellen mit den Frequenzen $F_i$, welche gleich dem Mehrfachen der Netzfrequenz $F_1$ sind:

$$F_i = (2{*}i{-}1){*}F_1, \text{ mit } i = 1,2,3,4\ldots$$

Das Verfahren schreibt vor, wie die hypersinusoidalen $U_{hle}$-Spannungen und die sinusoidalen $U_{hac}$-Spannungen bestimmt werden, wodurch auch die zugehörigen $\Delta U$-Spannungen bestimmt sind.

Die hypersinusoidale Spannung $U_{hle}$ mit maximaler Zeitfläche ist rechteckig, hat eine Amplitude gleich $U_{lex}$ und eine sehr hohe maximale Oberwellen-Frequenz $F_{ix}$.

Je kleiner die maximale Frequenz $F_{ix}$ ist, desto kleiner ist die $U_{hle}$-Zeitfläche und die zugehörige $U_{hac}$-Zeitfläche. Je kleiner die $U_{hac}$-Zeitfläche ist, desto kleiner ist die Amplitude der $U_{hac}$-Spannung und die Leistung $P_{hac}$ des HAC-Netzes.

Die rechteckige $U_{hle}$-Spannung mit der Amplitude $U_{lex}$ und die sinusoidale $U_{hac}$-Spannung mit der Amplitude $\frac{\pi}{2}{*}U_{lex}$, ~ 1.57*$U_{lex}$ haben die gleichen Zeitflächen. Demzufolge darf die $U_{hac}$-Amplitude maximal $\frac{\pi}{2}{*}U_{lex}$ betragen, d.h. sie darf grösser als die Amplitude der ursprünglichen Phasenspannung $U_{ac}$ gewählt werden, wie aus Figur 2 ersichtlich ist.

Die hypersinusoidalen $U_{hle}$-Spannungen, welche aus den $U_{hac}$-Spannungen entstehen, sind synchron zu den zugehörigen $U_{hac}$-Spannungen mit der fundamentalen Frequenz $F_1$ (Netzfrequenz), wie das ebenfalls aus Figur 2 hervorgeht.

Die $\Delta U$-Spannungen sind ebenfalls synchron zu den $U_{hac}$-Spannungen. Die $U_{hac}$- und die $U_{hle}$-Spannungen des HAC-Netzes sind synchron zu den gleichwertigen Spannungen $U_{ac}$ und $U_{le}$ des ursprünglichen AC-Netzes - wie sich aus Figur 2 erschliesst, denn sowohl die $U_{ac}$- als auch die $U_{hac}$-Spannungen entstehen durch die Transformation der gleichen Eingangsspannungen $U_{11}$ bzw. $U_{12}$, die in der Anordnung nach Figur 3 anliegen. Der AC-Strom $I_{ac}$ ist ebenfalls synchron und phasengleich zu den Phasenspannungen $U_{hac}$ bzw. $U_{ac}$ - siehe Figur 2.

Die Summe der Integralwerte des Produktes der nominalen Phasenströme $I_{ac}$ mit den zugehörigen $\Delta U$-Spannungen eines dreiphasigen HAC-Netzes berechnet sich zu

$$3 * \int Iac * \Delta U$$

und entspricht der Wirkleistung, welche die $\Delta$-Generatoren für die Einkopplung der $\Delta U$-Spannungen benötigen. Der Summenwert ist gleich Null. Dies bedeutet, dass die $\Delta$-Generatoren nur Scheinleistung (Blindleistung, reaktive Leistung) liefern. Dies gilt auch bei einphasigen oder mehrphasigen Netzen.

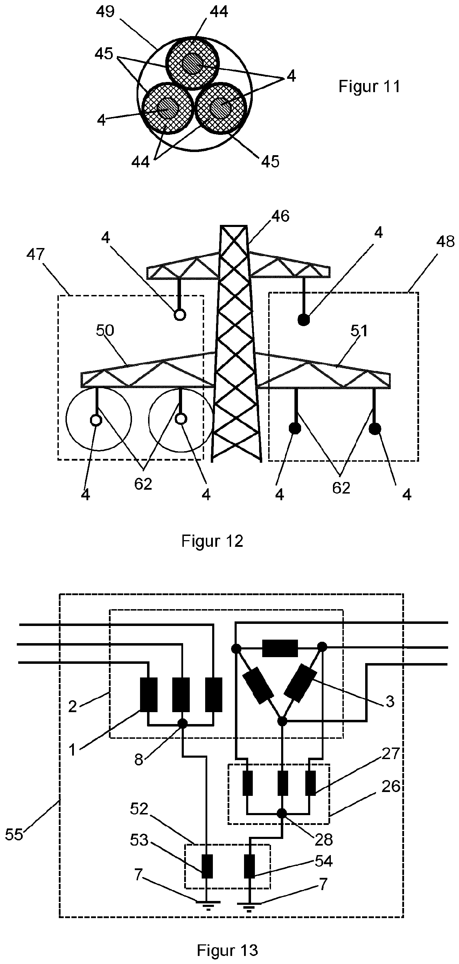

Der Querschnitt der Leiter 4 eines Erdkabels 49 nach Figur 11 einer bestehenden AC-Trasse mit Erdkabeln wird durch den nominalen Strom $I_{ac}$ definiert. Die Dicke der Isolation 44 um die spannungsgeladenen Leiter 4 ist durch den $U_{lex}$-Wert, d.h. durch den Maximalwert der Leiter-Erde Spannung $U_{le}$ bestimmt.

Wenn das HAC-Netz mit dem nominalen Phasenstrom $I_{ac}$ betrieben wird und die Amplitude der hypersinusoidalen Spannungen $U_{hle}$ kleiner bzw. gleich der $U_{lex}$ gewählt werden, dann kann die bestehende AC-Trasse als ein HAC-Netz mit der höheren Leistung $P_{hac}$ betrieben werden.

Wenn ein HAC-Netz mit Freileitern ausgeführt ist, wie in Figur 12 dargestellt, und mit dem nominalen Phasenstrom $I_{ac}$ betrieben wird, bleibt der Querschnitt der Freileiter der ursprünglichen AC-Trasse unverändert. Wenn die hypersinusoidalen Leiter-Erde Spannungen $U_{hle}$ kleiner bzw. gleich $U_{lex}$ sind, bleiben die Isolatoren 62 und die Masten 46 der Freileiter-Trasse, welche auch für den $U_{lex}$-Wert ausgelegt ist, unverändert. Demzufolge kann unter diesen Bedingungen das HAC-Netz mit der unveränderten AC-Freileiter-Trasse betrieben werden.

Jede $\Delta U$-Spannung eines dreiphasigen bzw. einphasigen HAC-Netzes wird erfindungsgemäss in je zwei Spannungen $U_s$ und $U_h$ aufgeteilt. Die Frequenzen der Oberwellen der $U_s$-Spannung entsprechen $F_1{*}3{*}(2{*}i{-}1)$, mit i=1,2,3... und mit der fundamentalen Frequenz $F_1$ gleich der Netzfrequenz. Die $U_h$- und die $U_s$-Spannungen sind phasengleich mit den Phasenspannungen $U_{hac}$. Die $U_s$-Spannungen für die drei Netzphasen eines dreiphasigen Netzes sind gleich und können nur von drei einphasigen Netztrafos und nicht von einem dreiphasigen AC-Netztrafo übertragen werden.

Jede der $U_h$-Spannungen einer Phase wird aus der Differenz der zugehörigen $\Delta U$-Spannung mit der $U_s$-Spannung gebildet. Jede $U_h$-Spannung besteht aus der fünften, siebenten, elften etc. Oberwelle der zugehörigen Phasenspannung $U_{hac}$. Die Summe der drei $U_h$-Spannungen eines dreiphasigen AC-Netzes ist gleich Null. Sowohl die einphasigen als auch die dreiphasigen $U_h$-Spannungen können von AC-Netztrafos übertragen werden.

Die Figur 3 zeigt das Blockschaltbild eines drei- bzw. einphasigen HAC-Netzes. Das dreiphasige HAC-Netz wurde durch die Erweiterung eines ursprünglichen dreiphasigen AC-Netzes mit den dreiphasigen $\Delta_3$-Generatoren 13, 14, welche die dreiphasigen $\Delta U$-Spannungen erzeugen und einkoppeln, erreicht. Der einspeisende Netztrafo 2 transformiert die sinusoidalen Spannungen $U_{11}$, welche an den Eingangspulen 1 anliegen, zu den sinusoidalen Phasenspannungen $U_{hac}$ um, welche an den Netzspulen 3 anliegen. Der $\Delta_3$-Generator 13 koppelt (addiert) die drei zugehörigen $\Delta U$-Spannungen zu den

drei $U_{hac}$-Spannungen ein und bildet die hypersinusoidalen Spannungen $U_{hle}$ zwischen den zugehörigen Leitern 4 und der Erde 7. Die drei sinusoidalen Phasenströme $I_{ac}$ werden unverändert durch den $\Delta_3$-Generator 13 durchgeleitet. Der $\Delta_3$-Generator 14 koppelt (subtrahiert) die zugehörigen $\Delta U$-Spannungen aus den $U_{hac}$-Spannungen aus und bildet die drei sinusoidalen Phasenspannungen $U_{hac}$, welche an den Netzspulen 5 des belastenden Netztrafos 6 anliegen. Die sinusoidalen Phasenströme $I_{ac}$ werden unverändert durch den $\Delta_3$-Generator 14 durchgeleitet.

Die $\Delta_3$-Generatoren 13 in der Anordnung nach der Figur 3, welche an den Netzspulen 3 der einspeisenden Netztrafos 2 angeschlossen sind, messen die $U_{hle}$-Spannungen, die $U_{hac}$-Spannungen und die Ströme $I_{ac}$ mit einer hohen Abtastrate ( > $10*F_{ix}$) und sorgen dafür, dass die Frequenzen, die Amplituden, und die Phasen der eingekoppelten $\Delta U$-Spannungen online so angepasst werden, dass jederzeit die korrekten hypersinusoidalen Spannungen $U_{hle}$ zwischen den Leitern 4 und der Erde 7 anliegen, sowie die Phasenspannungen $U_{hac}$ phasengleich zu den zugehörigen Phasenströmen $I_{ac}$ sind.

Die $\Delta_3$-Generatoren 14, welche an den Netzspulen 5 der belastenden Netztrafos 6 angeschlossen sind, messen die Spannungen $U_{12}$ und die Phasenströme $I_{ac}$, welche zu den Abnehmern weitergeleitet werden und sorgen dafür, dass die Frequenzen, die Amplituden und die Phasen der ausgekoppelten $\Delta U$-Spannungen online so angepasst werden, dass die $U_{12}$-Spannungen oberwellenfrei und phasengleich mit den zugehörigen Phasenströmen $I_{ac}$ sind. Die Topologie eines einphasigen HAC-Netzes ist gleich, es kommen aber einphasige $\Delta 1$-Generatoren zum Einsatz.

Die Figur 6 zeigt den prinzipiellen Aufbau eines $\Delta$-Generators, welcher entweder einphasig (für ein einphasiges AC-Netz) oder dreiphasig (für ein dreiphasiges AC-Netz) ausgeführt wird. Ein einphasiger $\Delta_1$-Generator besteht aus einem einphasigen Wechselrichter 20, welcher die $\Delta U$-Spannung erzeugt und von der Quelle 19 versorgt wird. Der einphasige Koppeltrafo 21 transformiert die $\Delta U$-Spannung potentialgetrennt von der Eingangsspule 22 zu der Ausgangsspule 23. Der einphasige mechanische Schalter 24 überbrückt die Ausgangsspule 23 und schützt den $\Delta_1$-Generator vor Überspannungen. Der einphasige elektronische Schalter 25 verkürzt die Einschaltverzögerung unter 100 $\mu$s und wird optional eingebaut.

Ein $\Delta_2$-Generator ist eine Ausführungsvariante des einphasigen $\Delta_1$-Generators. Der Unterschied besteht darin, dass der Koppeltrafo 21 mit zwei Ausgangsspulen 23 ausgestattet ist, welche gleiche aber entgegengesetzte $\Delta U$-Spannungen liefern. Der dreiphasige $\Delta_3$-Generator ist wie der einphasige $\Delta_1$-Generator aufgebaut, allerdings sind sowohl der Wechselrichter 20 als auch der Koppeltrafo 21 und die Schalter 24 bzw. 25 dreiphasig ausgeführt.

Für die Kopplung der $\Delta U$-Spannungen wird nur Scheinleistung benötigt, da ein $\Delta$-Generator in Normbetrieb nur die kapazitiven Ströme liefert, die für die Umladung der Leiterkapazitäten $C_s$ benötigt werden. Dementsprechend ist die Leistung der Versorgung 19, welche nur die Verluste des Wechselrichters 20 und des Koppeltrafos 21 deckt, kleiner als 1% der HAC-Netzleistung $P_{hac}$.

Je breiter das Spektrum der $\Delta U$-Spannungen ist, desto grösser sind die hypersinusoidalen $U_{hle}$-Zeitflächen und desto höher sind die $U_{hac}$-Spannungen und die Netzleistung $P_{hac}$. Die $\Delta U$-Obennrellen erzeugen hochfrequente elektrische und magnetische Felder, welche durch Normen stark limitiert sind. Darüber hinaus werden kapazitive Ströme in den Leiter-Erde Kondensatoren angeregt, welche zu Verlusten in den Leitern und in den Schirmen von Kabeln führen.

Aus diesen Gründen sind folgende Frequenzen der $\Delta U$-Oberwellen für ein Industrienetz mit 50/60 Hz praxisrelevant:

- Die $\Delta U_9$-Spannung, derer Spektrum auf die neunte Oberwelle begrenzt ist, führt zu einer Steigerung der Netzleistung um bis zu 25%.
- Die $\Delta U_7$-Spannung, deren Spektrum auf die siebte Oberwelle begrenzt ist, für zu einer Steigerung der Netzleistung um 23%;
- Die $\Delta U_5$-Spannung, deren Spektrum auf die fünfte Oberwelle begrenzt ist, führt zu einer Steigerung der Netzleistung um 20%;
- Die $\Delta U_3$-Spannung, deren Spektrum auf die dritte Oberwelle begrenzt ist, führt zu einer Steigerung der Netzleistung um 16%.

Bei einem Bahnnetz kann die $F_{ix}$-Frequenz um den Faktor 3 erhöht werden, denn die fundamentale Frequenz $F_1$ ist gleich 16 2/3 Hz.

Die ohmschen Leitungsverluste des HAC-Netzes und des ursprünglichen AC-Netzes sind gleich, wenn die Phasenströme den Nominalwert $I_{ac}$ beibehalten. Die auf die Netzleistung bezogenen Leitungsverluste eines HAC-Netzes sind um maximal 44% geringer als die spezifischen Leistungsverluste des ursprünglichen AC-Netzes. Die bezogenen Leistungsverluste des HAC-Netzes mit begrenzten Oberwellen-Frequenzen liegen zwischen 25% bis 44% tiefer als die bezogenen Leistungsverluste des ursprünglichen AC-Netzes.

Im Folgenden werden drei Ausführungsbeispiele der S-Generatoren vorgestellt, welche die $U_s$-Spannungen generieren: der $S_1$-Generator, der $\Delta S$-Generator und der $S_3$ Generator.

Der einphasige $S_1$-Generator ist wie der einphasige $\Delta_1$-Generator aufgebaut, wie in Figur 6 gezeigt. Der einphasige Wechselrichter 20 erzeugt die Spannung $U_s$, der einphasige Koppeltrafo 21 koppelt diese Spannung zu der Ausgangsspule 23, welche vom Schalterpaar 24, 25 bei Bedarf überbrückt wird.

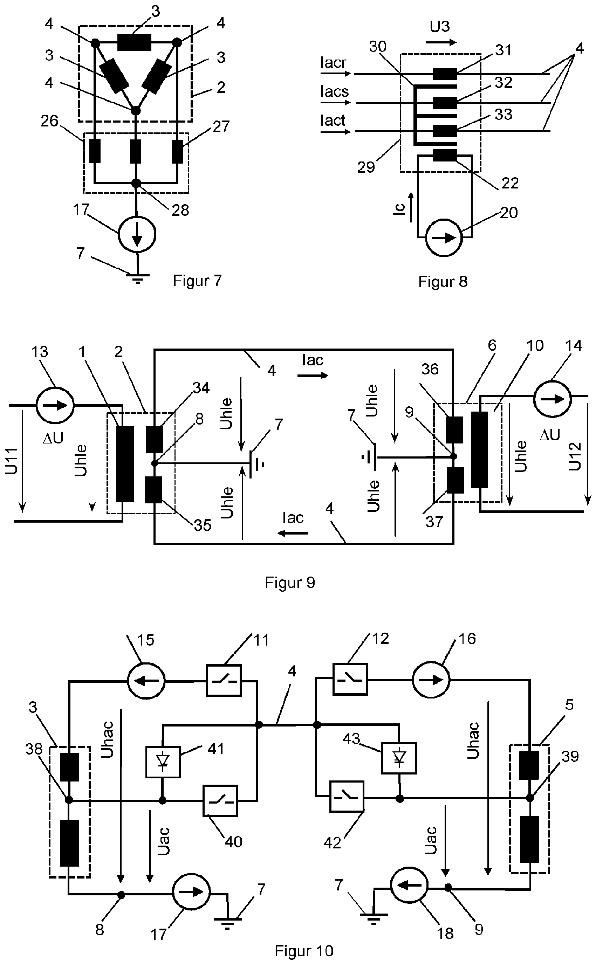

Wenn die Netzspulen eines Netztrafos in $\Delta$-geschaltet sind, wie in Figur 7 dargestellt, dann wird zwi-

schen dem $S_1$-Generator 17 und den Netzspulen 3 ein Erdungstrafo 26 zugeschaltet, dessen Spulen 27 den Sternpunkt 28 bilden und mit den Netzleitern 4 verbunden sind. Dieser sogenannte ΔS-Generator kann an beliebiger Stelle entlang der Leitertrasse des AC-Netzes angeschlossen werden und die $U_s$-Spannungen einkoppeln.

Ein sogenannter $S_3$-Generator erzeugt wie in Figur 8 gezeigt drei gleiche potentialgetrennte Spannungen $U_s$ und ist wie ein $S_1$-Generator aufgebaut, mit folgenden Unterschieden. Der Koppeltrafo 29 des $S_3$-Generators ist mit drei potentialgetrennten Ausgangsspulen 31, 32, 33 ausgestattet, welche über den gemeinsamen Magnetkern 30 mit der Eingangsspule 22 gekoppelt sind. Je eine Ausgangsspule 31, 32, 33 wird zwischen je einem Leiter 4 und der zugehörigen Netzspule 3 zugeschaltet. Unter Bezugnahme auf Figur 4 muss der Netztrafo 2, welcher mit einem $S_3$-Generator 17 erweitert ist, mit einem Sternpunkt 8 ausgestattet sein, welcher geerdet ist, wie in Figur 4 gezeigt. Jede der Ausgangsspulen 31, 32, 33 des $S_3$-Generators liefert die Spannung $U_s$ und diese Ausgangsspulen 31, 32, 33 leiten die Phasenströme $I_{acr}$, $I_{acs}$, Iact wie in Figur 8 gezeigt.

Im Folgenden werden drei Ausführungsbeispiele der H-Generatoren vorgestellt, welche die $U_h$-Spannungen generieren: der $H_1$-Generator, der $H_2$-Generator und der $H_3$ Generator.

Der Aufbau eines einphasigen $H_1$-Generators entspricht dem Aufbau eines $Δ_1$-Generators, wie gezeigt in der Figur 6. Der einphasige Wechselrichter 20 erzeugt die Spannung $U_h$, der einphasige Koppeltrafo 21 überträgt diese Spannung zu der Ausgangsspule 23, welche zwischen einer Netzspule 3 bzw. 5 und einer Leitung 4 angeschlossen wird (Figur 4).

Der Aufbau eines einphasigen $H_2$-Generators entspricht dem Aufbau eines $Δ_2$-Generators, gezeigt in der Figur 6. Der einphasige Wechselrichter 20 erzeugt die Spannung $U_h$, der Koppeltrafo 21 koppelt diese Spannung zu zwei potentialgetrennten Ausgangsspulen 23, welche zwei gleiche und entgegengesetzte $U_h$-Spannungen liefern. Der $H_2$-Generator kommt zum Einsatz bei einphasigen AC-Netzen. Zwei $H_1$-Generatoren können als ein $H_2$-Generator zusammengefasst werden.

Der Aufbau eines dreiphasigen $H_3$-Generators entspricht dem Aufbau eines $H_1$-Generators. Ein dreiphasiger Wechselrichter 20 erzeugt die drei $U_h$-Spannungen, und der dreiphasige Koppeltrafo 21 transformiert die $U_h$-Spannungen zu den drei Ausgangsspulen 23. Der $H_3$-Generator kommt zum Einsatz bei dreiphasigen Netzen. Drei $H_1$-Generatoren können als ein $H_3$-Generator zusammengefasst werden. Jeder $Δ_1$-Generator, $Δ_2$-Generator bzw. $Δ_3$-Generator kann aus den Ausführungsvarianten der S- und der H-Generatoren zusammengesetzt werden.

Die Figur 4 zeigt die Topologie eines dreiphasigen HAC-Netzes mit mindestens einem $S_1$-Generator, welcher an den Sternpunkten 8 der Netzspulen 3 von mindestens einem Netztrafo 2 angeschlossen ist und mit je einem $H_3$-Generator 15 bzw. 16, welcher an je einer Netzspule 3 bzw. 5 der Netztrafos 2 bzw. 6 angeschlossen ist. Die Sternanschlüsse 9 der Netzspulen 5 ohne $S_1$-Generatoren dürfen nicht oder nur sehr hochohmig geerdet werden, denn die $S_1$-Generatoren werden bei der Erdung eines Sternanschlusses 9 kurzgeschlossen. Eine andere Möglichkeit besteht darin, die Sternanschlüsse 9 ohne $S_1$-Generator 17 mit je einer Abschlussimpedanz 18 abzuschliessen, welche so abgestimmt ist, dass die Spannung über der Abschlussimpedanz 18 der benötigten $U_s$-Spannung entspricht.

Die Figur 5 zeigt die Topologie eines dreiphasigen HAC-Netzes mit mindestens einem $S_3$-Genrator, welcher zwischen den Leitern 4 und den Netzspulen 3 von mindestens einem Netztrafo 2 angeschlossen ist, und mit je einem $H_3$-Generator 15 bzw. 16, welcher an den drei Eingangsspulen 1 bzw. 10 der Netztrafos 2 bzw. 6 angeschlossen ist. Die Sternanschlüsse 9 der Netzspulen 2, welche an den $S_3$-Generator angeschlossen sind, müssen geerdet werden, damit die hypersinusoidalen Spannungen $U_{hle}$ entstehen. Die Sternanschlüsse 9 der Netzspulen 5, welche frei sind, dürfen nicht oder nur sehr hochohmig geerdet werden, damit die $U_s$-Spannungen nicht kurzgeschlossen werden. Eine andere Möglichkeit besteht darin, die freien Sternanschlüsse ohne $S_1$-Generator mit je einer Abschlussimpedanz 18 abzuschliessen, welche so abgestimmt ist, dass die Spannung über der Abschlussimpedanz 18 der $U_s$-Spannung entspricht.

Die Figur 9 zeigt die Topologie eines einphasigen HAC-Netzes. Jedem einphasigen Netztrafo 2 bzw. 6 ist je ein $Δ_1$-Generator 13, 14 zugeordnet, welcher mit der Eingangsspule 1 bzw. 10 verbunden ist. Die Ausgangspule jedes einphasigen Netztrafos 2 bzw. 6 wird durch je einen Mittelabgriff 8 bzw. 9 in je zwei gleichwertige Netzspulen 34, 35 bzw. 36, 37 aufgeteilt. Die Mittelabgriffe 8, 9 sind geerdet. Der einphasige $Δ_1$-Generator 13 koppelt (addiert) die zugehörige ΔU-Spannung zu der Eingangsspannung $U_{11}$ des einspeisenden Netztrafos 2 ein und bildet die hypersinusoidalen Spannungen $U_{hle}$, welche zu den Netzspulen 34 bzw. 35 transformiert werden. Die hypersinusoidalen Spannungen an den Netzspulen 34 bzw. 35 sind gleich und entgegengerichtet. Je zwei Leiter 4 verbinden mindestens einen einspeisenden Netztrafo 2 mit mindestens einem belastenden Netztrafo 6. Die Phasenströme $I_{ac}$ beider Leiter 4 sind gleich und entgegengesetzt. Der belastende Netztrafo 6 transformiert die hypersinusoidale Spannung $U_{hle}$ der Netzspulen 36 bzw. 37 zu der Eingangsspule 10 des belastenden Netztrafos 6. Der Δ-Generator 14 koppelt (subtrahiert) die zugehörige ΔU-Spannung von der Phasenspannung $U_{hac}$ der Eingangsspule 10 aus und bildet damit die sinusoidale Spannung $U_{12}$, welche an die Abnehmer weitergeleitet wird.

Eine andere Variante der Topologie des einphasigen HAC-Netzes sieht vor, dass je ein $Δ_2$-Generator 13 mit zwei Ausgangsspulen verwendet wird. Je eine Ausgangsspule des $A_2$-Generators 13 koppelt je eine ΔU-Spannung in je eine Netzspule 34 bzw. 35 ein, und je eine Ausgangsspule des $\Delta_2$-Generator 14 koppelt je eine ΔU-Spannung von den Netzspule 36 bzw. 37 eines belastenden Netztrafos 6 aus, so dass der belastende Netztrafo 6 die sinusoidale Phasenspannung $U_{hac}$ zu der sinusoidalen Spannung $U_{12}$ transformiert.

Entlang der Leiterstrecke des HAC-Netzes verschieben sich die Phasenlagen der Oberwellen-Spannungen zur Grundschwingung aufgrund der Leiterimpedanzen. Die Phasenverschiebungen der $U_h$- und $U_s$-Spannungen gegenüber der Phasenspannungen $U_{hac}$ vergrössern sich mit der Länge der Leiter, welche die Netztrafos verbinden. Die Phasenverschiebungen der $U_h$- und $U_s$-Spannungen erhöhen die Amplitude der hypersinusoidalen Spannung $U_{hle}$, die Phasenspannungen $U_{hac}$ müssen infolgedessen reduziert werden, und als Folge verringert sich die Netzleistung $P_{hac}$.

Eine vorgegebene maximale Phasenverschiebung $\Psi_{sx}$ bzw. $\Psi_{hx}$ für die $U_s$- und $U_h$-Spannungen limitiert die Leiterlänge zwischen den S- bzw. den H-Generatoren. Wenn die Phasen der $U_s$- und $U_h$-Spannungen am Anfang der Leitungen mit den jeweiligen Phasenwerten -0.5* $\Psi_{sx}$ bzw. -0.5* $\Psi_{hx}$ erzeugt werden, dann betragen diese Phasenwerte am Ende der Leitungen 0.5* $\Psi_{sx}$ bzw. 0.5* $\Psi_{hx}$. Demzufolge ermöglicht diese Vorsteuerung der Phasenwinkel eine Verdoppelung die Länge zwischen zwei S- bzw. H-Generatoren.

Erfindungsgemäss können mehrere ΔS-Generatoren sowie H-Generatoren entlang einer Netzstrecke angeordnet werden. Die Phasenlage der $U_h$- und $U_s$-Spannungen, welche entlang der Netzstrecke eingekoppelt werden, ist durch die H- und ΔS-Generatoren so gesteuert, dass die maximalen $\Psi_{sx}$- bzw. $\Psi_{hx}$ -Werte nicht überschritten werden.

Der H-Generator 15 bzw. 16 kann die Leistung, welche der zugeordnete Netztrafo 2 bzw. 6 in Figur 4 einspeist bzw. abnimmt, regeln anstelle eines Regeltrafos. Die Phase der Regelspannung $U_r$, bezogen auf die Phasenspannung $U_{hac}$, variiert zwischen -90° und +90°. Die Regelspannung variiert nach dem Stand der Technik um +/- 10% der Phasenspannungsamplitude. Die Leistung des H-Generators muss um die Regelleistung erhöht werden. Dadurch kann sowohl die aktive als auch die reaktive Leistung, welche der Transformator 2 bzw. 6 liefert bzw. abnimmt, teilweise oder vollständig geregelt werden.

Erfindungsgemäss können die $S_1$-Generatoren in einer Anordnung nach Figur 4 den Kurzschlussstrom löschen, welcher während eines Kurzschlusses zwischen dem kurzgeschlossenen Leiter 4 der zugehörigen Netzspule 3 und der Erde 7 fliesst.

Die Grösse des Kurzschlussstromes hängt vom Abstand zwischen dem Kurzschluss und der Netzspule 3 ab. Der $S_1$-Generator erkennt den Kurzschluss und baut die benötigte Gegenspannung für die Löschung des Kurzschlussstromes auf. Die installierte Leistung des Wechselrichters 20 und des Kopplungstrafos 21 nach Figur 6 vergrössert sich dabei.

Figur 10 zeigt den Aufbau eines redundanten HAC-Netzes. Die Phasenspannung $U_{ac}$ wird von den Abgängen 38 bzw. 39 der Netzspulen 3 bzw. 5 abgenommen. Die Netzschalter 11 bzw. 12 verbinden die Abgänge der Netzspulen 3 bzw. 5 mit den zugehörigen Leitern 4 und die Schalterpaare 40, 41 bzw. 42, 43 verbinden die Abgriffe 38 bzw. 39 mit den zugehörigen Leitern 4. Jedes Schalterpaar 40, 41 bzw. 42, 43 besteht aus je einem mechanischen Netzschalter 40 bzw. 42 und aus je einem elektronischen Schalter 41 bzw. 43, welcher parallel zu dem mechanischen Schalter 40 bzw. 42 geschaltet ist. Die elektronischen Schalter 41 bzw. 43 werden dann eingesetzt, wenn Einschaltzeiten kleiner 100 μs benötigt werden, d.h. wenn der höhere $U_{hac}$-Wert auf den tieferen $U_{ac}$-Wert sehr schnell umgeschaltet werden muss.

Das HAC-Netz wird auf zwei Arten betrieben: Im Normalbetrieb als ein HAC-Netz mit der grösseren Phasenspannung $U_{hac}$ und im Fehlerfall oder bei Bedarf als AC-Netz mit der tieferen Phasenspannung $U_{ac}$. Während des Betriebs als HAC-Netz sind die Leiter 4 mit den Ausgängen der Netzspulen 3 bzw. 5 verbunden, die Netzschalter 11 und 12 sind geschlossen und die Schalterpaare 40, 41 bzw. 42, 43 sind offen. Während des Betriebs als AC-Netz sind die Netzschalter 11 bzw. 12 offen und die Schalterpaare 40, 41 und 42, 43 geschlossen. Darüber hinaus sind alle H-Generatoren und alle S-Generatoren überbrückt, so dass keine $U_h$ bzw. $U_s$ Spannungen anliegen. Das HAC-Netz ist damit zum ursprünglichen AC-Netz zurückgeschaltet worden.

Die Leiter-Leiter Spannung $U_{ll}$, welche in einem dreiphasigen AC-Netz anliegt, ist gleich

$$\sqrt{3} \, ^*U_{ac} \sim 1.71 ^*U_{ac}.$$

Die Amplitude der Leiter-Leiter Spannung $U_{hll}$ eines HAC-Netzes ist gleich der doppelten Amplitude der Phasenspannung $U_{ac}$, unabhängig von der maximalen Oberwellenfrequenz $F_{ix}$. Die $U_{hll}$-Spannung ist demzufolge maximal (V3/2 -1) ~ 16% grösser als die $U_{ll}$-Spannung, auch dann, wenn die Phasenspannungen $U_{hac}$ grösser als 116%*$U_{ac}$ sind (z.B. 157%*$U_{ac}$). Das vorgestellte Verfahren reduziert demzufolge sowohl die Leiter-Erde Spannungen $U_{hle}$ als auch die Leiter-Leiter Spannungen $U_{hll}$ und ist somit einmalig.

Die um maximal 16% höhere $U_{hll}$-Spannung ist kein Problem für das AC-Kabel 49 nach Figur 11, wenn die Leiter 4 einzeln isoliert und abgeschirmt sind, und die Schirme 45 geerdet sind. Ein Erdkabel 43 besteht in der Regel aus einem Leiter 4 und aus einem Isolator 44, welcher den Leiter 4 umschliesst und isoliert, sowie aus dem Schirm 45, um den Isolator 44 elektrostatisch von der Umgebung zu entkoppeln. Dadurch hat die Leiter-Leiter Spannung $U_{hll}$ keinen Einfluss auf die Spannung $U_{hle}$ zwischen dem Leiter und dem geerdeten Schirm 45, d.h. auf die Isolation 44 des Leiters 4. Ein in dieser Art aufgebautes Kabel kann unverändert im modifizierten HAC-Netz eingesetzt werden.

Drei einzelne Kabel können wie in Figur 11 dargestellt zu einem Erdkabel 49 zusammengefasst werden, wenn die Leiter 4 einzeln durch die Isolatoren 44 isoliert und durch die geerdeten Schirme 45 einzeln abgeschirmt sind. Auch ein so aufgebautes Kabel kann unverändert in einem modifizierten HAC-Netz eingesetzt werden.

Die Höhe der Masten 46 von bestehenden AC-Trassen mit Freileitern, wie in Figur 12 gezeigt, bleibt trotz einer höheren $U_{hac}$-Spannung unverändert, denn die Mastenhöhe ist proportional zur $U_{hle}$-Amplitude, welche bei einer Erweiterung zum HAC-Netz unverändert bleibt, wie das die Figur 2 aufzeigt. Der Abstand zwischen zwei benachbarten Freileitern 4 eines Auslegers 50 bzw. 51 ist nach dem Stand der Technik durch das Pendeln der Freileitern 4 an den Isolatoren 62 bei hohen Windlasten bestimmt. Die Luftstrecke zwischen zwei benachbarten Leitern isoliert eine höhere Spannung ~ $2*U_{ac}$ als die Spannung $U_{hll}$ ~ $1.17*U_{ac}$. Bei Strecken mit kritischen Windlasten muss aber unter Umständen der Abstand zwischen benachbarten Leitern geringfügig (um < 16%) vergrössert werden, oder bei stark pendelnden Leitern muss das HAC-Netz temporär zum AC-Netz umgeschaltet werden.

Figur 12 zeigt einen Mast für ein HAC-Freileiternetz mit reduzierter elektrischer und magnetischer Strahlung. Die meisten Freileiter-Trassen beinhalten sechs Leiter, welche in zwei dreiphasigen HAC-Systemen 47 und 48 gruppiert sind. Das erste dreiphasige HAC-System 47 wird durch drei Leiter 4 gebildet, das zweite dreiphasige HAC-System 48 wird durch weitere drei Leiter 4 gebildet. Die Leiter 4 beider HAC-Systeme 47 und 48 verlaufen parallel zueinander. Die beiden dreiphasigen HAC-Systeme 47 und 48 gewährleisten eine redundante Übertragung. Beim Ausfall eines HAC-Systems erfolgt die Übertragung mit dem zweiten HAC-System weiter, allerdings mit reduzierter Leistung $P_{hac}/2$.

Die E-Felder der Spannungen $U_{hac}$ und $U_h$ eines dreiphasigen HAC-Systems heben sich gegenseitig auf, denn die Summe der $U_h$-Spannungen bzw. der $U_{hac}$-Spannungen ist gleich Null. Die drei gleichen $U_s$-Spannungen eines HAC-Systems 47 oder 48 heben sich jedoch nicht gegenseitig auf, sondern addieren sich. Das E-Feld der $U_s$-Spannung eines dreiphasigen HAC-Systems 47 bzw. 48 ist demzufolge nicht kompensiert.

Erfindungsgemäss sind die Ströme und Spannungen des ersten HAC-Systems 47 gegen die Ströme und Spannungen des zweiten HAC-Systems 48 gerichtet, was einer Phasenverschiebung einer halben Periode der Netzfrequenz entspricht. Die beiden HAC-Systeme 47, 48 übertragen die Leistung in die gleiche Richtung, aber das elektrische Feld der $U_s$-Spannung des HAC-Systems 47 ist entgegengesetzt dem elektrischen Feld der $U_s$-Spannung des HAC-Systems 48 gerichtet. Die beiden E-Felder der Us-Spannungen überlagern sich und kompensieren sich dabei.

Auch die magnetischen und elektrischen AC-Restfelder der sinusoidalen Phasenspannungen $U_{hac}$ des HAC-Systems 47 sind entgegengesetzt zu den AC-Restfeldern des HAC-Systems 48 gerichtet. Die gegenseitig gerichteten AC-Restfelder beider HAC-Systeme 47, 48 überlagern sich und schwächen sich um weitere 17% ab.

Beim Ausfall eines dreiphasigen HAC-Systems 47 bzw. 48 werden die S- und H-Generatoren beider HAC-Systeme überbrückt und das fehlerhafte HAC-System wird abgeschaltet. Die Phasenspannungen des funktionierenden HAC-Systems werden auf den $U_{ac}$-Wert reduziert, und das funktionierende HAC-System 47 bzw. 48 wird im Fehlerfall als ein konventionelles AC-Netz betrieben, falls die Grenzwerte der von $U_s$ generierten Felder überschritten werden.

Die konventionellen einphasigen Netztrafos können die hypersinusoidalen Leiter-Erde Spannungen $U_{hle}$ transformieren.

Die dreiphasigen Netztrafos können die $U_s$-Spannungen nicht transformieren, denn die $U_s$-Spannungen sind für alle drei Phasen gleich (common mode) und heben sich in den verketteten Leiter-Leiter Spannungen $U_{hll}$ auf.

Figur 13 zeigt den Aufbau eines dreiphasigen Netztrafos 55 (HAC-Netztrafo genannt), welcher die sinusoidalen Phasenströme $I_{ac}$ und Phasenspannungen $U_{hac}$ sowie die hypersinusoidalen Leiter-Erde Spannungen $U_{hle}$ transformiert. Dieser dreiphasige HAC-Netztrafo 55 besteht aus einem dreiphasigen Netztrafo 2, aus einem Erdungstrafo 26 und aus einem einphasigen Trafo 52 mit der gleichen Übersetzung wie der dreiphasige Netztrafo 2. In dieser Figur 13 wird ein dreiphasiger Y-Δ Trafo eingesetzt. Die Spulen 27 des Erdungstrafos 26 sind mit den Δ-geschalteten Netzspulen 3 verbunden und bilden den Sternanschluss 28 der Δ-geschalteten Netzspulen 3. Die Eingangsspule des einphasigen Trafo 52 ist zwischen dem Sternanschluss 8 der Y-geschalteten Spulen 1 des dreiphasigen Trafos 2 und der Erde 7 angeschlossen. Die Spannung, welche an der Eingangsspule 53 des einphasigen Trafos 52 anliegt, ist die $U_s$-Spannung der hypersinusoidalen Leiter-Erde Spannung $U_{hle}$ des HAC-Netzes. Die Ausgangsspule 54 des einphasigen Trafos ist zwischen dem Sternanschluss 28 und der Erde 7 angeschlossen und liefert die transformierte $U_s$-Spannung. Ein dreiphasiger Δ-Y HAC-Netztrafo ist analog zu dem dreiphasigen Y-Δ HAC-Netztrafo aufgebaut.

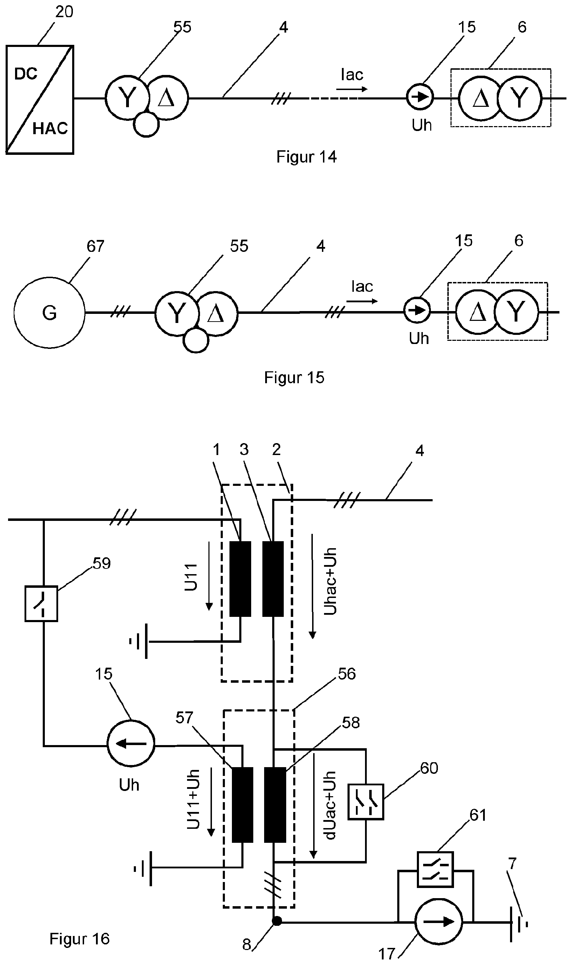

Figur 14 zeigt das Blockschaltbild eines dreiphasigen HAC-Netzes, dessen Spannungen von einem vorhandenen Voll-Wechselrichter 20 erzeugt werden. Die AC-Netzanbindung einer Solaranlage, einer Windanlage sowie eines Batteriespeichers erfolgt mit einem Voll-Wechselrichter 20, welcher nach dem Stand der Technik die drei sinusoidalen $U_{ac}$-Spannungen an einen AC-Netztrafo liefert. Erfindungsgemäss erzeugt der Voll-Wechselrichter 20 mit einer hypersinusoidalen Modulation die drei hypersinusoidalen Leiter-Erde Spannungen $U_{hle}$. Diese $U_{hle}$-Spannungen werden an einen dreiphasigen HAC-Netztrafo 55 (Figur 13), welcher diese Spannungen transformiert, angelegt. Der HAC-Netztrafo 55 (Figur 13) kann sowohl vom Y-Δ Typ als auch vom Δ-Y Typ sein und transformiert die HAC-Spannungen zu den Leitern 4. Der belastende HV-AC-Netztrafo 6 ist mit dem HAC-Netztrafo verbunden. Der H-Generator 15 koppelt die $U_h$-Spannung vor dem belastenden AC-Netztrafo 6 aus. Die restliche $U_s$-Spannung wird vom AC-Netztrafos 6 (Figur 14) ausgekoppelt, denn der dreiphasige AC-Netztrafo 6 kann die $U_s$-Spannung nicht transformieren.

Synchrongeneratoren werden bei Windanlagen aber auch als Kraftwerk-Generatoren eingesetzt und können hypersinusoidale Spannungen direkt erzeugen (HAC-Synchrongenerator). Die Voraussetzung dafür ist, dass die Luftspalte zwischen den Polen des Rotors und des Stators entsprechend geformt sind.

Die Figur 15 zeigt die Anbindung eines dreiphasigen HAC-Synchrongenerators 67 an ein HAC-Netz mit einem dreiphasigen HAC-Netztrafo 36, analog zu der Anbindung eines dreiphasigen Voll-Wechselrichters 20 an ein dreiphasiges HAC-Netz wie es in Figur 14 dargestellt ist.

Die Ströme und die Spannungen der Leiter eines dreiphasigen Systems streuen unerwünschte magnetische und elektrische Felder (B- und E-Felder). Die magnetischen und elektrischen Felder der Phasenströme und der Phasenspannungen eines dreiphasigen AC-Systems schwächen sich gegenseitig ab. Die magnetischen und elektrischen Restfelder der Systeme 47 und 48 nach Figur 12 addieren sich hingegen, denn die Ströme und die Spannungen beider Systeme sind nach dem Stand der Technik synchron und gleichgerichtet.

Die E-Felder der dreiphasigen Spannungen $U_{hac}$ und $U_h$ eines dreiphasigen HAC-Systems schwächen sich ebenfalls gegenseitig ab. Die drei gleichen $U_s$-Spannungen des HAC-Systems 47 bzw. 48 in Figur 12 heben sich aber nicht auf, sondern addieren sich. Das E-Feld der $U_s$-Spannung eines dreiphasigen HAC-Systems 47 bzw. 48 wird demzufolge nicht kompensiert.

Erfindungsgemäss sind die Ströme und Spannungen des ersten Systems 47 in Figur 12 gegen die Ströme und Spannungen des zweiten Systems 48 gerichtet. Die beiden Systeme 47, 48 übertragen die Leistung in die gleiche Richtung, aber das elektrische Feld der $U_s$-Spannung des Systems 47 ist entgegengesetzt dem elektrischen Feld der $U_s$-Spannung des Systems 48. Diese Felder überlagern sich und kompensieren sich dabei.

Auch die magnetischen und elektrischen AC-Restfelder der sinusoidalen Phasenspannungen $U_{hac}$ des Systems 44 sind entgegengesetzt zu den Feldern des Systems 45. Die AC-Restfelder beider Systeme überlagern sich und schwächen sich um weitere 16% ab.

Beim Ausfall eines dreiphasigen Systems 47 oder 48 werden die S- und H-Generatoren beider Systeme überbrückt und das fehlerhafte System wird abgeschaltet. Die Phasenspannungen des funktionierenden Systems werden auf den $U_{ac}$-Wert reduziert, und das funktionierende System 47 oder 48 wird im Fehlerfall als ein konventionelles AC-Netz betrieben.

Die Figur 16 zeigt eine Anlage, welche es erlaubt, ein dreiphasiges AC-Netz mit einem dreiphasigen HAC-Netz zu koppeln und umgekehrt. Dabei wird der bestehende dreiphasige Netztrafo 2 des AC-Netzes mit einem dreiphasigen Erweiterungstrafo 56 erweitert. Der Erweiterungstrafo 56 transformiert die Eingangsspannungen U11, welche an den Eingangsspulen 57 anliegen, zu den Zusatzspannungen $dU_{ac}$, welche an den Ausgangsspulen 58 anliegen. Die Zusatzspannungen $dU_{ac}$ addieren sich zu den Phasenspannungen $U_{ac}$, wodurch die $U_{hac}$-Spannungen zwischen den Leitern 4 und dem Sternanschluss der Ausgangsspulen 58 entstehen. Die Ausgangsspulen 58, welche seriell mit den Netzspulen 3 geschaltet sind, werden bei Bedarf vom Schalterpaar 60 überbrückt. Die Zusatzspannungen $dU_{ac}$ betragen ca. 16% - 25% der $U_{ac}$-Spannungen.

Der H-Generator 15 koppelt die $U_h$-Spannungen in die Eingangsspulen 57 des Erweiterungstrafos 56 ein, welche zu den Ausgangsspulen 58 transformiert werden. Schliesslich koppelt der $S_1$-Generator 17 die $U_s$-Spannung zwischen dem Sternpunkt 8 und der Erde 17 ein, womit die $U_{hle}$-Spannungen zwischen den Leitern 4 und der Erde 7 gebildet werden. Das Schalterpaar 61 überbrückt den $S_1$-Generator im Fehlerfall. Alternativ zu dem $S_1$-Generator können die drei Ausgangsspulen 31, 32, 33 eines $S_3$-Generators in Serie zwischen den Ausgangsspulen 58 des Erweiterungstrafos 56 und dem Sternpunkt 8 angeschlossen werden.

Diese dreiphasige Anlage kann auch einphasig ausgeführt werden. Die einphasige Anlage beinhaltet einen einphasigen Netztrafo, einen einphasigen Erweiterungstrafo, einen $H_1$-Generator und einen $S_1$-Generator, sowie einphasige Schalter und Schalterpaare. Anstelle von einphasigen H- und S-Generatoren kann auch ein Δ1-Generator eingesetzt werden. Die Eingangsspulen 1 des Netztrafos können in Y oder in Δ geschaltet werden. Die Ausgangsspulen 3 des Netztrafos 2 können in Δ oder in Y geschaltet werden.

Bei einem Leiter-Erde Kurzschluss liegen Überspannungen zwischen den Netzspulen 3 des Netztrafos 2 und der Erde 7, bzw. zwischen den Ausgangsspulen 58 des Erweiterungstrafos 56 und der Erde 7 an, welche bis zu zwei Mal höher als $U_{ac}$ sind. Wenn man die bestehenden Netztrafos beibehält, dann müssen die $dU_{ac}$-Spannung und die $U_h$-bzw. $U_s$-Spannungen überbrückt werden.

Auch der Erweiterungstrafo 56 muss von Überspannungen im Fehlerfall geschützt werden. Der Erweiterungstrafo 58 bzw. der $S_1$-Generator 17 werden vor den unzulässigen Überspannungen geschützt, indem diese Spannungen durch die Schalterpaare 60 bzw. 61 überbrückt werden. Der Netztrafo 2 wird im Fehlerfall geschützt, indem die $U_{hle}$- und die $U_{hac}$-Spannungen auf die $U_{le}$- und Uac-Werte reduziert werden, indem die Schalterpaare 60 bzw. 61 die Spannungen $dU_{ac}$, $U_h$, und $U_s$ überbrücken.

Die Überbrückung muss schnell (< 100 μs) er-

folgen und wird mit je einem Schalterpaar 60 bzw. 61 realisiert. Ein Schalterpaar 60 besteht aus einem mechanischen Schalter 24 und aus einem parallel geschalteten elektronischen Schalter 25 und schliesst sehr schnell (<100 μs) kurz - siehe Figur 6.

Die Leiter-Erde Spannungen $U_{hle}$ bzw. die Phasenspannungen $U_{hac}$ werden durch die Überbrückung auf die tieferen AC-Werte $U_{ac}$ bzw. $U_{le}$ reduziert. Dadurch wird die Isolation des Netztrafos 2 im Fehlerfall entlastet. Die Isolation des Erweiterungstrafos 56 wird im Fehlerfall nicht beansprucht, weil sowohl die Spannungen an den Ausgangsspulen 58 durch die Überbrückung gleich Null gesetzt und die Eingangsspulen 57 des Erweiterungstrafos 56 durch den Schutzschalter 59 vom Netz getrennt werden.

Der Erweiterungstrafo 56 kann entsprechend der Figur 16 für eine Spannungsklasse tiefer als die Netztrafos isoliert werden. Dies reduziert wesentlich die Kosten für den Umbau einer bestehenden AC-Anlage.

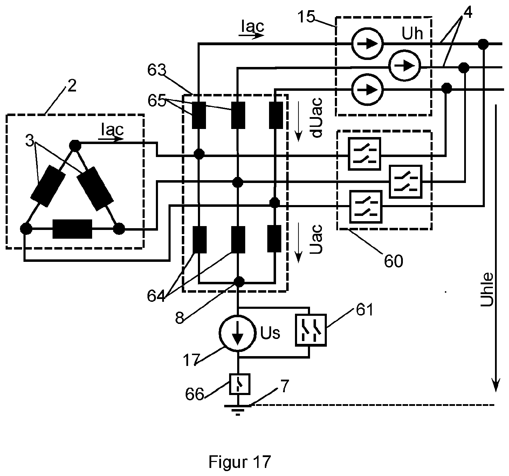

Eine weitere Möglichkeit, ein dreiphasiges AC-Netz mit einem dreiphasigen HAC-Netz zu koppeln besteht darin, einen dreiphasigen Netztrafo 2 mit einem dreiphasigen Spartrafo 63 zu erweitern, wie in Figur 17 gezeigt.

Die Netzspulen 3 des Netztrafos 2 sind in Dreieck geschaltet. Die Erdungsspulen 64 des Spartrafos 63 sind in Stern geschaltet und bilden den Sternanschluss 8. Die Netzspulen 65 des Spartrafos 63 liefern die Zusatzspannungen $dU_{ac}$ und leiten den Phasenstrom $I_{ac}$ durch. So entstehen am Ausgang des Spartrafos 63 die höheren Phasenspannungen $U_{hac} = U_{ac} + dU_{ac}$. Ein $H_3$-Generator 15 koppelt die drei zugehörigen $U_h$-Spannungen in die Netzspulen 65 des Spartrafos 63 ein. Ein $S_1$-Generator 17 koppelt die $U_s$-Spannung zwischen dem Sternanschluss 8 der Erdungsspulen 64 und der Erde 7 ein und bildet die $U_{hle}$-Spannungen des HAC-Netzes zwischen den Leitern 4 und der Erde 7. Das dreiphasige Schalterpaar 60 überbrückt bei Bedarf die Netzspulen 64 des Spartrafos 63 und den $H_3$-Generator 15. Das Schalterpaar 61 überbrückt gleichzeitig den $S_3$-Generator und der Trennschalter 66 trennt gleichzeitig die Erdungsspulen 64 des Spartrafos 63 von der Erde 7.

Die Anlage in der Figur 17 kann auch mit einem einphasigen Netztrafo 2 und mit einem einphasigen Spartrafo für einphasige AC-Netze umgesetzt werden. Die einphasige Anlage beinhaltet einen einphasigen Netztrafo, einen einphasigen Spartrafo, einen $H_1$-Generator und einen $S_1$-Generator, sowie den einphasigen Trennschalter 66 und die einphasigen Schalterpaare 60 und 61. Anstelle von einphasigen $H_1$- und $S_1$-Generatoren kann ein $\Delta 1$-Generator eingesetzt werden. Die Eingangspulen 1 des einphasigen Netztrafos 2 können in Y oder in $\Delta$ geschaltet werden. Die Ausgangsspulen 3 des Netztrafos 2 können in $\Delta$ oder in Y geschaltet werden.

**Liste der Bezeichnungen und der Bezugsziffern**

| | |
|---|---|
| $U_{ac}$ | sinusoidale Phasenspannung des AC-Netzes |
| $U_{hac}$ | sinusoidale Phasenspannung des HAC-Netzes |
| $U_{11}, U_{12}$ | sinusoidale Eingangsspannungen der Netztrafos des AC-Netzes |
| $dU_{ac}$ | sinusoidale Zusatzspannung, gleich ($U_{hac}$ - $U_{ac}$) |
| $U_{le}$ | sinusoidale Leiter-Erde Spannung des AC-Netzes |
| $U_{hle}$ | hypersinusoidale Leiter-Erde Spannung eines HAC-Netzes |
| $U_{lex}$ | maximaler Wert der Leiter-Erde Spannung des AC-Netzes und des HAC-Netzes |
| $U_{ll}$ | Leiter-Leiter (verkettete) Spannung des AC-Netzes |
| $U_{hll}$ | Leiter-Leiter (verkettete) Spannung des HAC-Netzes |
| $I_{ac}$ | sinusoidaler Phasenstrom des AC-Netzes |
| $I_{acr}$ | sinusoidaler Phasenstrom des AC-Netzes, Phase R (Fig. 8) |
| $I_{acs}$ | sinusoidaler Phasenstrom des AC-Netzes, Phase S (Fig. 8) |
| $I_{act}$ | sinusoidaler Phasenstrom des AC-Netzes, Phase T (Fig. 8) |
| Pac | Leistung des AC-Netzes |
| $P_{hac}$ | Leistung des HAC-Netzes |
| ΔU | Differenzspannung, erzeugt von einem Δ-Generator |
| $F_1$ | fundamentale Netzfrequenz |
| $F_{ix}$ | maximale Frequenz der Oberwellen der ΔU-Spannung |
| $U_s$ | Oberwellenkomponente der ΔU- Spannung, erzeugt von einem S-Generator |
| $U_h$ | Oberwellenkomponente der ΔU- Spannung, erzeugt von einem H-Generator |
| $\Delta_1, \Delta_3$ | einphasiger Δ-Generator, dreiphasiger Δ-Generator |
| $\Delta_2$ | $\Delta_1$-Generator mit zwei Ausgangsspulen |
| $H_1, H_3$ | einphasiger H-Generator, dreiphasiger H-Generator |
| $H_2$ | einphasiger H-Generator mit zwei Ausgangsspulen |
| $S_1, S_3$ | S-Generator mit einer Ausgangsspule, S-Generator mit drei Ausgangsspulen |

| | | |
|---|---|---|
| 1 | Eingangsspule zu Netztrafo 2 | |
| 2 | (einspeisender) Netztrafo | |
| 3 | Netzspule zu Netztrafo 2 | |
| 4 | Leiter | |
| 5 | Netzspule zu Netztrafo 6 | |
| 6 | (belastender) Netztrafo | |
| 7 | Erde | |
| 8 | Sternpunkt der Netzspulen (Fig.1, Fig. 3, Fig. 4, Fig. 5, Fig. 9, Fig. 10, Fig. 16, Fig. 17) | |
| 9 | Sternpunkt der Netzspulen (Fig.1, Fig. 3, Fig. 4, Fig. 5, Fig. 9, Fig. 10) | |
| 10 | Eingangsspule zu Netztrafo 6 | |

11 Netzschalter zu Netztrafo 2 (Fig. 1, Fig. 10)

12 Netzschalter zu Netztrafo 6 (Fig. 1, Fig. 10)

13 $\Delta$-Generator zu Netztrafo 3 (Fig. 3, Fig. 9)

14 $\Delta$-Generator zu Netztrafo 6 (Fig. 3, Fig. 9)

15 $H_3$ Generator zu Netztrafo 3 (Fig. 4, Fig. 5, Fig. 10, Fig. 14, Fig. 15, Fig. 16, Fig. 17)

16 $H_3$ Generator zu Netztrafo 6 (Fig. 4, Fig. 5, Fig. 10 )

17 $S_1$-Generator, (Fig. 4, Fig. 16, Fig. 17)

18 Abschlussimpedanz (Fig. 4)

19 Spannungsquelle zu 20 (Fig. 4, Fig. 20)

20 einphasiger/dreiphasiger Wechselrichter (Fig. 6, Fig. 8, Fig. 14)

21 einphasiger/dreiphasiger Koppeltrafo zu 20 (Fig. 6)

22 Eingangsspule des Koppeltrafos 21 (Fig. 6, Fig. 8)

23 Ausgangsspule des Koppeltrafos 21 (Fig. 6)

24 mechanischer Schalter 24 zum Schalterpaar 60 (Fig. 6)

25 elektronischer Schalter 25 zum Schalterpaar 60 (Fig. 6)

26 Erdungstrafo (Fig. 7, Fig. 13)

27 Spulen des Erdungstrafos (Figur 7, Fig. 13)

28 Sternpunkt der Spulen 27 (Figur 7, Fig. 13)

29 Koppeltrafo eines $S_3$-Generators (Fig. 8)

30 gemeinsamer Magnetkern von 29 (Fig. 8)

31 Ausgangsspule zu 29 (Fig. 8)

32 Ausgangsspule zu 29 (Fig. 8)

33 Ausgangsspule zu 29 (Fig. 8)

34 Netzspule des einphasigen Netztrafos 2 (Fig. 9)

35 Netzspule des einphasigen Netztrafos 2 (Fig. 9)

36 Netzspule des einphasigen Netztrafos 3 (Fig. 9)

37 Netzspule des einphasigen Netztrafos 3 (Fig. 9)

38 Abgriff der Netzspule 3 mit der Spannung $U_{ac}$ (Fig. 10)

39 Abgriff der Netzspule 5 mit der Spannung $U_{ac}$ (Fig. 10)

40 Mechanischer Schalter zu den Netzspulen 3 (Fig. 10)

41 Elektronischer Schalter zu den Netzspulen 3 (Fig. 10)

42 Mechanischer Schalter zu den Netzspulen 5 (Fig. 10)

43 Elektronischer Schalter zu den Netzspulen 5 (Fig. 10)

44 Isolation, Isolator um den Leiter 4 eines Erdkabels 49

45 Schirm, Abschirmung um den Isolator 44

46 Freileitermast

47 dreiphasiges HAC System (Fig. 12)

48 dreiphasiges HAC System mit entgegengesetzten Strömen und Spannungen zu 47 (Figur 12)

49 Erdkabel mit drei Leitern

50 Linksausleger des Freileitermastes 46

51 Rechtsausleger des Freileitermastes 46

52 einphasiger Trafo (Fig. 13)

53 Eingangsspule zu 52 (Figur 13)

54 Ausgangsspule zu 52 (Fig. 13)

55 dreiphasiger HAC-Netztrafo (Fig. 13, Fig. 14, Fig. 15)

56 dreiphasiger Erweiterungstrafo (Fig. 16)

57 Eingangsspulen zum Erweiterungstrafo 56

58 Netzspulen zum Erweiterungstrafo 56 (Fig. 16)

59 Netzschalter zum Erweiterungstrafo 56

60 Schalterpaar (Fig. 6, Fig. 16, Fig. 17)

61 Schalterpaar (Fig. 16, Fig. 17)

62 Isolator am Mastausleger 46 (Figur 12)

63 Spartrafo (Fig. 17)

64 Erdungsspulen zu 63

65 Netzspulen zu 63

66 Trennschalter (Fig. 17)

67 dreiphasiger HAC-Synchrongenerator (Fig. 15)

## Patentansprüche

1. Verfahren für die Steigerung der Leistung eines ein- bzw. mehr- phasigen AC-Netzes, welches mindestens einen einspeisenden Netztrafo (2) mit Netzspulen (3) und mindestens einen belastenden Netztrafo (6) mit Netzspulen (5) einschliesst, welche mit den Leitern (4) verbunden sind und die nominalen sinusoidalen Phasenströme $I_{ac}$ mit der fundamentalen Netzfrequenz $F_1$ leiten, wobei die Netzspulen (3, 5) mit den sinusoidalen Phasenspannungen $U_{ac}$ belegt sind und die Spannungen $U_{le}$ zwischen den Leitern (4) und der Erde (7) eine maximale Isolationsspannung $U_{lex}$ nicht überschreiten, *dadurch gekennzeichnet,* **dass** die Phasenspannungen an den Ausgängen der Netzspulen (3, 5) auf einen Wert $U_{hac}$ grösser als $U_{ac}$ und kleiner als $(\pi/2)*U_{ac}$ erhöht werden, infolge dessen das AC-Netz mehr Leistung mit den nominalen Phasenströmen $I_{ac}$ übertragen kann, je ein $\Delta$-Generator (13, 14) zwischen je einer Netzspule (3, 5) und je einer Leitung (4) angeschlossen wird und je eine Differenzspannung $\Delta U$ ein- bzw ausgekoppelt wird, wodurch die Amplitude der Spannungen $U_{hle}$ zwischen den Leitern (4) und der Erde (7) auf die Isolationsspannung $U_{lex}$ begrenzt wird und die Amplitude der Spannungen zwischen den Leitern $U_{hll}$ reduziert wird.

2. Verfahren für die Steigerung der Leistung eines ein- bzw. mehr- phasiges AC Netzes nach Anspruch 1, *dadurch gekennzeichnet,* **dass** die Phasenzahl der Differenzspannung $\Delta U$ gleich der Phasenzahl des AC-Netzes ist, jede $\Delta U$-Spannung aus einer einphasigen Spannung $U_s$ und aus je einer ein- bzw. mehr- phasigen Spannungen $U_h$ gebildet wird, wobei die $U_s$-Spannung gleich für alle Phasen ist, aus Oberwellenspannungen mit Frequenzen gleich F1*3*(2*i-1) mit i=1,2,3... besteht und von mindestens einem einphasigen S-Generator (17) erzeugt wird, und jede $U_h$-Spannung gleich der Differenz der zugehörigen $\Delta U$-Spannung mit der $U_s$-Spannung ist und von je einem H-Generator (15, 16) gebildet wird, und zwischen der zugehörigen Netzspule (3, 5) und den zugehörigen Leitern (4) ein- bzw. ausgekoppelt wird, wobei mit den S- und H-Generatoren nur Blindleistung ins Netz ein- bzw. ausgekoppelt wird, sodass die Steigerung der Netzleistung allein durch die höhere Phasenspannung $U_{hac}$ zustande kommt.

3. Verfahren nach einem der Ansprüche 1 bis 2,
*dadurch gekennzeichnet,*
**dass** je ein H-Generator (15, 16), angeschlossen an je einen Netztrafo (2, 6), zusätzlich zu der $U_h$-Spannung eine Regelspannung $U_r$ erzeugt, welche eine variable Phase und eine variable Amplitude aufweist, womit die Blindleistung und die Wirkleistung, welche der Netztrafo (2, 6) liefert bzw. abnimmt, geregelt wird, indem die Phase und die Amplitude der Regelspannung $U_r$ durch den zugehörigen H-Generator (15, 16) verändert werden.

4. Verfahren nach einem der Ansprüche 1 bis 3,
*dadurch gekennzeichnet,*
**dass** ein $S_1$-Generator (17), angeschlossen zwischen dem Sternpunkt (8) der Netzspulen (3) der Erde (7), den Kurzschlussstrom, welcher bei einem Kurzschluss zwischen einem der Leitern (4) und der Erde (7) entsteht, löscht.

5. Verfahren nach einem der Ansprüche 1 bis 4,
*dadurch gekennzeichnet,*
**dass** im Bedarfsfall zusätzliche $U_s$- und $U_h$-Spannungen zwischen der Erde (7) und den Leitern (4), welche zwei benachbarte Netztrafos (2, 6) verbinden, mit so einer Phase eingekoppelt werden, dass die Phasenverschiebungen der $U_h$-Spannungen und der $U_s$-Spannungen entlang der Leiter (4), bezogen auf die zugeordneten Phasenspannungen $U_{hac}$, begrenzt werden.

6. Verfahren nach einem der Ansprüche 1 bis 5,
*dadurch gekennzeichnet,*
**dass** das Netz dreiphasig ist, mindestens ein $S_1$-Generator (17) zwischen einem Sternanschluss (8) der Netzspulen (3) von mindestens einem Netztrafo (2) und der Erde (7) angeschlossen wird und die Sternanschlüsse (9) der Netzspulen (5) der restlichen Netztrafos (6) frei bleiben, oder mit je einer Abschlussimpedanz (18) geerdet werden, und/oder mit mindestens einem $S_3$-Generator (17) drei $U_s$-Spannungen zwischen je einer Netzspule (3) von mindestens einem Netztrafo (2) und dem zugehörigen Leiter (4) erzeugt werden, wobei die Sternanschlüsse (8) der Netzspulen (2), welche mit den $S_3$-Generatoren verbunden sind, geerdet werden und die Sternanschlüsse (9) der Netzspulen (5), welche nicht mit $S_3$- oder $S_1$-Generatoren verbunden sind, frei bleiben, oder mit je einer Abschlussimpedanz (18) geerdet werden, sowie je ein $H_3$-Generator (15, 16) drei

$U_h$-Spannungen erzeugt werden, wobei jeder dieser $H_3$-Generatoren jedem Netztrafo (2, 6) zugeordnet ist und entweder an den Eingangsspulen (1, 10), oder an den Netzspulen (3) bzw. (5) der Netztrafos (2, 6), angeschlossen wird.

7. Verfahren nach einem der Ansprüche 1 bis 6,
*dadurch gekennzeichnet,*
**dass** das dreiphasige HAC Netz mindestens einen Netztrafo (2) mit Δgeschalteten Netzspulen (3) beinhaltet, welche an den Y-gebundenen Erdungsspulen (27) eines Erdungstrafos (26) angeschlossen werden, und entweder mit einem $S_1$-Generator (17) der Sternanschluss (28) der Erdungsspulen (27) mit der Erde (7) verbunden wird, oder ein $S_3$-Generator zwischen den Erdungsspulen (27) und dem geerdeten Sternanschluss (28) angeschlossen wird.

8. Verfahren nach einem der Ansprüche 1 bis 7 für ein dreiphasiges HAC Netz mit Freileitern, bestehend aus einem ersten dreiphasigen HAC-System (47) und aus einem zweiten dreiphasigen HAC-System (48), welche räumlich parallel zueinander verlaufen,
*dadurch gekennzeichnet,*
**dass** die Phasenspannungen $U_{hac}$, die Phasenströme $I_{ac}$ und die Leiter-Erde Spannungen $U_{hle}$ des ersten HAC-Systems (47) entgegengesetzt zu den Phasenspannungen $U_{hac}$, zu den Phasenströmen $I_{ac}$ und zu den $U_{hle}$-Spannungen des zweiten HAC-Systems (48) gerichtet werden, wodurch die elektrischen Felder, welche von den Spannungen beider HAC-Systeme erzeugt werden, sich teilweise bis vollständig aufheben und die magnetischen Felder, welche von den Phasenströmen beider HAC-Systeme erzeugt werden, sich teilweise bis vollständig aufheben .

9. Verfahren für die Steigerung der Leistung eines einphasigen AC Netzes nach einem der Ansprüche 1 bis 5
*dadurch gekennzeichnet,*
**dass** entweder jeder einphasige Netztrafo (2, 6) mit je zwei gleichen Netzspulen (34, 35, 36, 37) ausgestattet ist und je einem Δ1-Generator (13, 14) zugeordnet wird, mit welchem je eine ΔU-Spannung in die Eingangsspule (1) des einspeisenden Netztrafos (2) eingekoppelt wird, sowie mit je einem Δ1-Generator (14) die ΔU-Spannung von je einer Ausgangsspule (10) des belastenden Netztrafos (6) ausgekoppelt wird, oder mit je einem $Δ_2$-Generator je eine ΔU-Spannung in je eine Netzspule (34, 35) des einspeisenden Netztrafos (2) eingekoppelt wird, und mit je einem $Δ_2$-Generator die ΔU-Spannung aus je einer Netzspule (36, 37) eines belastenden Netztrafos (2) ausgekoppelt wird.

10. Anlage zur Durchführung des Verfahrens nach einem der Ansprüche 1 bis 8,

*dadurch gekennzeichnet,*
**dass** ein dreiphasiger HAC-Trafo (55), welcher die Leiter-Erde Spannungen $U_{hle}$ und die Phasenspannungen $U_{hac}$ transformiert, aus einem dreiphasigen Δ-Y oder Y-Δ Netztrafo (2), und aus einem dreiphasigen Erdungstrafo (26), dessen Spulen (27) die Ausgänge der Δ-geschalteten Netzspulen (3) mit dem Sternanschluss (28) verbinden, sowie aus einem einphasigen Trafo (52) besteht, wobei die Eingangsspule (53) des einphasigen Trafos (52) zwischen dem Sternanschluss (8) und der Erde (7) angeschlossen ist und die Ausgangsspule (54) des einphasigen Trafos (52) zwischen dem Sternanschluss (28) und der Erde (7) angeschlossen ist .

11. Anlage zur Durchführung des Verfahrens nach einem der Ansprüche 1 bis 8,
*dadurch gekennzeichnet,*
**dass** entweder ein dreiphasiger Wechselrichter (20) vorhanden ist, welcher die volle Netzleistung $P_{hac}$ umwandelt, sowie die Phasenspannungen $U_{hac}$, die Oberwellenspannungen $U_h$ und $U_s$ erzeugt, oder ein dreiphasiger rotierende Generator (62) vorhanden ist, welcher die volle Netzleistung $P_{hac}$ liefert, sowie die Phasenspannungen $U_{hac}$ und die Oberwellenspannungen $U_h$ und $U_s$ erzeugt, ein dreiphasiger HAC Netztrafo (53) die $U_{hac}$, die $U_h$ und die $U_s$ Spannungen beider Varianten transformiert und die Leiter (4) einen HAC Netztrafo (53) mit einem nachgeschalteten dreiphasigen AC Netztrafo (6) verbinden, wobei ein $H_3$-Generator (55) die $U_h$-Spannungen vor den Eingangsspulen des nachgeschalteten AC Netztrafos (6) auskoppelt.

12. Anlage zur Durchführung des Verfahrens nach einem der Ansprüche 1 bis 9,
*dadurch gekennzeichnet,*
**dass** ein Erdkabel (49) aus einem oder mehreren Leitern (4) besteht, wobei jeder Leiter (4) von je einem Isolator (44) isoliert und von je einem geerdeten Schirm (45) abgeschirmt ist .

13. Anlage zur Durchführung des Verfahrens nach einem der Ansprüche 1 bis 8,
*dadurch gekennzeichnet,*
**dass** die Eingangsspulen (1) eines dreiphasigen Netztrafos (2) mit den Eingangsspulen (57) eines dreiphasigen Erweiterungstrafos (56) verbunden sind, die Netzspulen (58) des Erweiterungstrafos (56) an den der Netzspulen (3) des Netztrafos (2) angeschlossen sind und die Isolationsspannungen des Erweiterungstrafos (56) tiefer bis gleich den Isolationsspannungen des Netztrafos (3) ausgelegt sind, die Netzspulen (58) des Erweiterungstrafos zwischen den Netzspulen (3) des Netztrafos (2) und einem Sternanschluss (8) geschaltet sind, und ein $H_3$-Generator (15) zwischen den Eingangsspulen (57) des Erweiterungstrafos (56) und den Eingangsspulen (1) des Netztrafos (2) angeschlossen ist, und entweder ein $S_1$-Generator (17) zwischen dem Sternanschluss (8) und der Erde (7) angeschlossen ist, oder ein $S_3$-Generator zwischen den Netzspulen (58) des Erweiterungstrafos (56) und dem geerdeten Sternanschluss (8) angeschlossen ist, sowie ein Schalterpaar (60), welches die Netzspulen (58) des Erweiterungstrafos (56) im Fehlerfall überbrückt, und ein Schalterpaar (61) den $S_1$-Generator (17) bzw. $S_3$-Generator im Fehlerfall oder bei Bedarf, überbrückt, infolgedessen im Fehlerfall die $U_{hac}$- bzw. die $U_{hle}$-Spannungen am Ausgang des Anlage sich auf die $U_{ac}$- bzw. $U_{le}$-Spannungen reduzieren, und somit die Isolation des Netztrafos (2) und des Erweiterungstrafos (56) im Fehlerfall nicht überlastet werden.

14. Anlage zur Durchführung des Verfahrens nach einem der Ansprüche 1 bis 8,
*dadurch gekennzeichnet,*
**dass** ein dreiphasiger Netztrafo (2) mit Δ-geschalteten Netzspulen (3) an einem dreiphasigen Spartrafo (63) angeschlossen ist, dessen Netzspulen (65) die Phasenspannungen $U_{ac}$ auf die höheren Spannungen $U_{hac}$ transformieren und dessen Erdspulen (64) den Sternanschluss (8) bilden, ein $H_3$-Generator (15) die zugehörigen $U_h$-Spannungen einkoppelt und ein $S_1$-Generator (17) den Sternpunkt (8) mit der Erde verbindet und die $U_s$-Spannung einkoppelt, wobei im Fehlerfall das Schalterpaar (60) die $U_h$-Generatoren und die Netzspulen (65) kurzschliesst, das Schalterpaar (61) den $U_s$-Generator überbrückt und der Trennschalter (66) den Sternanschluss (8) von der Erde (7) trennt.

15. Anlage nach einem der Ansprüche 13, 14 zur Durchführung des Verfahrens nach Anspruch 9,
*dadurch gekennzeichnet,*
**dass** der Netztrafo (2) und der zugehörige Erweiterungstrafo (56) einphasig ausgeführt sind, oder der Netztrafo (2) und der zugehörige Spartrafo (63) einphasig ausgeführt sind, sowie in beiden Ausführungsvarianten entweder je ein einphasiger $H_1$-Generator (15) und je ein $S_1$-Generator (17), oder je ein $Δ_1$-Generator eingesetzt sind, sowie die Schalterpaare (60, 61) bzw. der Trennschalter (66) ebenfalls einphasig ausgeführt sind.

**Claims**

1. Method for increasing the power of a single-phase or multi-phase AC network, which includes at least one feeding network transformer (2) with network coils (3) and at least one loading network transformer (6) with network coils (5), which are connected to the conductors (4) and conduct the nominal sinusoidal phase currents $I_{ac}$ with the fundamental network fre-

quency $F_1$, the mains coils (3, 5) being loaded with the sinusoidal phase voltages $U_{ac}$ and the voltages $U_{le}$ between the conductors (4) and the ground (7) not exceeding a maximum insulation voltage $U_{lex}$, *characterized in* **that** the phase voltages at the outputs of the mains coils (3) and (5) respectively are increased to a value $U_{hac}$ higher than $U_{ac}$ and lower than $(\pi/2)*U_{ac}$, as a result of which the AC-network can transmit more power with the nominal phase currents $I_{ac}$, a $\Delta$generator (13, 14) each is connected between each line coil (3, 5) and each line (4) and a differential voltage $\Delta U$ each is coupled in or coupled out respectively, and as a result of which the amplitude of the voltages $U_{hac}$ between the conductors (4) and the earth (7) is limited to the insulation voltage $U_{lex}$ and the amplitude of the voltages $U_{hll}$ between the conductors is reduced.

2. Method for increasing the power of a single-phase or multi-phase AC network according to claim 1, *characterized in* **that** the phase number of the differential voltage $\Delta U$ is equal to the phase number of the AC-network, each $\Delta U$-voltage consists of a single-phase voltage $U_s$ and of one single-phase and of multi-phase voltages $U_h$ respectively, whereby the $U_s$ voltage being equal for all phases, and consisting of harmonic voltages with frequencies equal to $F_1*3*(2*i-1)$ with i = 1, 2, 3... and being generated by at least one single-phase S-generator (17), and each $U_h$ voltage being equal to the difference of the associated $\Delta U$ voltage with the $U_s$ voltage and being formed by an H-generator (15, 16) each, is being coupled in and out between the associated mains coil (3, 5) and the associated conductors (4), wherein only reactive power is coupled in and coupled out respectively by the S- and H-generators, so that the increase in the mains power is brought about solely by the higher phase voltage $U_{hac}$.

3. Method according to one of the claims 1 to 2, *characterized in that* **in that** each H-generator (15, 16) is connected to each one mains transformer (2, 6) which generates, in addition to the $U_h$ voltage, a regulating voltage $U_r$ which has a variable phase and a variable amplitude, by which the reactive power and the active power which the mains transformer (2, 6) supplies and receives, respectively, are regulated, by varying the phase and the amplitude of the regulating voltage $U_r$ by the associated H-generator (15, 16).

4. Method according to any one of claims 1 to 3, *characterized in* **that** an $S_1$-generator (17), connected between the star point (8) of the line coils (3) of the earth (7) quenches the short-circuit current which arises in the event of a short-circuit between one of the conductors (4) and the earth (7).

5. Method according to one of the claims 1 to 4, *characterized in that* **in that**, if necessary, additional $U_s$- and $U_h$-voltages are coupled in between the earth (7) and the conductors (4) which connect two adjacent mains transformers (2, 6) with such a phase that the phase shifts of the $U_h$ voltages and the $U_s$ voltages along the conductors (4), relative to the associated phase voltages $U_{hac}$, are limited.

6. Method according to any one of claims 1 to 5, *characterized in* **in that** the mains is three-phase, at least one $S_1$-generator (17) is connected between a star connection (8) of the mains coils (3) of at least one mains transformer (2) and earth (7), and the star connections (9) of the mains coils (5) of the remaining mains transformers (6) remain free, or are earthed with a respective terminating impedance (18), and/or with at least one $S_3$-generator (17) three $U_s$ voltages are generated between in each case one mains coil (3) of at least one mains transformer (2) and the associated conductor (4), wherein the star connections (8) of the mains coils (2), which are connected to the $S_3$-generators are grounded and the star connections (9) of the line coils (5) which are not connected to $S_3$- or $S_1$-generators remain free or are grounded with a terminating impedance (18) in each case, and in case a one $H_3$-generator (15, 16) generates three $U_h$ voltages, each of these $H_3$ generators being assigned to each power transformer (2, 6) and being connected either to the input coils (1, 10), or to the power coils (3, 5) of the power transformers (2, 6) respectively.

7. Method according to any one of claims 1 to 6, *characterized in* **that** the three-phase HAC network comprises at least one network transformer (2) with $\Delta$-connected network coils (3), which are connected to the Y-bonded ground coils (27) of a grounding transformer (26), and either an $S_1$-generator (17) is used to connect the star connection (28) of the ground coils (27) to earth (7), or an $S_3$-generator is connected between the grounding coils (27) and the grounded star connection (28).

8. Method according to any of claims 1 to 7 for a three-phase HAC network with overhead conductors, consisting of a first three-phase HAC system (47) and of a second three-phase HAC system (48), which run spatially parallel to each other, *characterized in* **that** the phase voltages $U_{hac}$, the phase currents lac and the phase-to-earth voltages $U_{hle}$ of the first HAC system (47) are directed opposite to the phase voltages $U_{hac}$, to the phase currents Iac and to the $U_{hle}$ voltages of the second HAC system (48), whereby the electric fields generated by the voltages of both HAC-systems partially to completely cancel and the magnetic fields generated by the phase currents of both HAC systems partially to completely cancel.

9. Method for increasing the power of a single-phase AC network according to any one of claims 1 to 5, ***characterized in***
in that either each single-phase mains transformer (2, 6) is equipped with two identical mains coils (34, 35, 36, 37) and is assigned to a $\Delta 1$-generator (13, 14) each, with each of which a $\Delta U$-voltage is coupled into the input coil (1) of the feeding mains transformer (2), and a $\Delta 1$-generator (14) each, the $\Delta U$-voltage is coupled out of an output coil (10) each of the loading mains transformer (6), or with a $\Delta 2$-generator each a $\Delta U$-voltage each is being coupled in to a mains coils (34, 35) each of the feeding mains transformer (2), and with a $\Delta 2$-generator each the $\Delta U$ voltage is decoupled from a mains coil (36, 37) each of a loading mains transformer (2).

10. Installation for carrying out the method according to one of claims 1 to 8, ***characterized in***
that a three-phase HAC transformer (55), which transforms the phase-to-earth voltages $U_{hle}$ and the phase voltages $U_{hac}$, consists of a three-phase $\Delta$-Y or Y-$\Delta$ mains transformer (2), and of a three-phase earthing transformer (26), the coils (27) of which connect the outputs of the $\Delta$-connected mains coils (3) to the star connection (28), and a single-phase transformer (52), the input coil (53) of the single-phase transformer (52) being connected between the star connection (8) and earth (7) and the output coil (54) of the single-phase transformer (52) being connected between the star connection (28) and earth (7).

11. Installation carrying out the process according to any one of claims 1 to 8, ***characterized in***
that either a three-phase inverter (20) is provided, which converts the full grid power $P_{hac}$, as well as generates the phase voltages $U_{hac}$, the harmonic voltages $U_h$ and $U_s$, or a three-phase rotating generator (62) is provided, which supplies the full grid power $P_{hac}$, as well as generates the phase voltages $U_{hac}$ and the harmonic voltages $U_h$ and $U_s$, a three-phase HAC mains transformer (53) transforms the $U_{hac}$, the $U_h$ and $U_s$ voltages of both variants and the conductors (4) connect a HAC mains transformer (53) to a downstream three-phase AC mains transformer (6), whereby a $H_3$-generator (55) is decoupling the $U_h$-voltages of the input coils of the downstream AC mains transformer (6).

12. Installation for carrying out the process according to any one of claims 1 to 9, ***characterized in***
that an earth cable (49) consists of one or more conductors (4), each conductor (4) being insulated by a respective insulator (44) and shielded by a respective earthed shield (45).

13. Installation for carrying out the process according to one of claims 1 to 8, ***characterized in***
that the input coils (1) of a three-phase mains transformer (2) are connected to the input coils (57) of a three-phase extension transformer (56), the line coils (58) of the extension transformer (56) are connected to the line coils (3) of the line transformer (2) and the insulation voltages of the extension transformer (56) are designed lower to equal to the insulation voltages of the line transformer (3), the line coils (58) of the extension transformer are connected between the line coils (3) of the line transformer (2) and a star terminal (8), and an $H_3$-generator (15) is connected between the input coils (57) of the extension transformer (56) and the input coils (1) of the mains transformer (2), and either an $S_1$-generator (17) is connected between the star connection (8) and the earth (7) or an $S_3$-generator is connected between the mains coils (58) of the extension transformer (56) and the earthed star connection (8), and a pair of switches (60) which bypasses the mains coils (58) of the extension transformer (56) in the event of a fault, and a pair of switches (61) which bypasses the $S_1$-generator (17) and the $S_3$-generator (17) respectively in the event of a fault or if required, as a result of which, in the event of a fault, the $U_{hac}$- and $U_{hle}$-voltages at the output of the installation are reduced to the Uac- and $U_{le}$-voltages, respectively, and thus the insulation of the mains transformer (2) and of the expansion transformer (56) are not overloaded in the event of a fault.

14. Installation for carrying out the method according to any one of claims 1 to 8, ***characterized in***
that a three-phase mains transformer (2) with $\Delta$-connected mains coils (3) is connected to a three-phase autotransformer (63), the mains coils (65) of which transform the phase voltages Uac to the higher voltages $U_{hac}$ and the earth coils (64) of which form the star connection (8), an $H_3$-generator (15) couples in the associated $U_h$-voltages and an $S_1$-generator (17) connects the star point (8) to earth and couples in the $U_s$-voltage, wherein in the event of a fault the pair of switches (60) short-circuits the $U_h$-generators and the mains coils (65), the pair of switches (61) bridges the $U_s$-generator and the isolating switch (66) disconnects the star point (8) from earth (7).

15. Installation according to any one of claims 13, 14 for carrying out the method according to claim 9, ***characterized in***

**in that** the mains transformer (2) and the associated extension transformer (56) are of single-phase design, or the mains transformer (2) and the associated autotransformer (63) are of single-phase design, and in both design variants either one single-phase $H_1$-generator (15) and one $S_1$-generator (17) each, or one $\Delta_1$-generator each, are used, and the switch pairs (60, 61) or the isolating switch (66) respectively, are likewise of single-phase design.

## Revendications

1. Procédé pour augmenter la puissance d'un réseau de distribution monophasé ou réseau AC polyphasé, qui comprend au moins un transformateur de réseau d'alimentation (2) avec des bobines de réseau (3) et au moins un transformateur de réseau de charge (6) avec des bobines de réseau (5), qui sont reliées aux conducteurs (4) et conduisent les courants de phase sinusoïdaux nominaux lac avec la fréquence de réseau fondamentale $F_1$, les bobines de réseau (3, 5) étant occupées par les tensions de phase sinusoïdales $U_{ac}$ et les tensions $U_{le}$ entre les conducteurs (4) et la terre (7) ne dépassant pas une tension d'isolation maximale $U_{lex}$, *caractérisé en ce que* que les tensions de phase aux sorties des bobines de réseau (3, 5) sont augmentées à une valeur $U_{hac}$ supérieure à Uac et inférieure à (/2)*$U_{ac}$, suite à quoi le réseau AC peut transmettre plus de puissance avec les courants de phase nominaux $I_{ac}$, un générateur (13, 14) est connecté entre une bobine de réseau (3, 5) et une ligne (4), et une tension différentielle $\Delta U$ est appliquée et supprimée, ce qui permet de limiter l'amplitude des tensions $U_{hle}$ entre les lignes (4) et la terre (7) à la tension d'isolation $U_{lex}$ et de réduire l'amplitude des tensions entre les lignes $U_{hll}$.

2. Procédé pour augmenter la puissance d'un réseau AC monophasé ou polyphasé selon la revendication 1,
   *caractérisé en ce que*
   le nombre de phases de la tension différentielle $\Delta U$ est égal au nombre de phases du réseau AC, chaque tension $\Delta U$ est composée d'une tension monophasée $U_s$ et d'une tension monophasée et d'une tension monophasée $U_s$. tensions polyphasées $U_h$, la tension $U_s$ étant égale pour toutes les phases, étant constituée de tensions harmoniques de fréquences égales à F1*3*(2*i-1) avec i=1,2,3... et est générée par au moins un générateur S monophasé (17), et chaque tension $U_h$ est égale à la différence entre la tension U associée et la tension $U_s$ et est formée par un générateur H respectif (15, 16), et est injectée ou injectée entre la bobine de réseau associée (3, 5) et les conducteurs associés (4). Les générateurs S et H n'introduisent et n'extraient que de la puissance réactive dans le réseau, de sorte que l'augmentation de la puissance du réseau est uniquement due à la tension de phase $U_{hac}$ plus élevée.

3. Procédé selon l'une des revendications 1 à 2,
   *caractérisé en ce que*
   **en ce que** chaque générateur H (15, 16), raccordé à chaque transformateur de réseau (2, 6), produit, en plus de la tension $U_h$, une tension de régulation $U_r$ qui présente une phase variable et une amplitude variable, ce qui permet de réguler la puissance réactive et la puissance active que le transformateur de réseau (2, 6) fournit ou diminue, en modifiant la phase et l'amplitude de la tension de régulation $U_r$ par le générateur H (15, 16) correspondant.

4. Procédé selon l'une des revendications 1 à 3,
   *caractérisé en ce que*
   **en ce qu'**un générateur $S_1$ (17), connecté entre le point neutre (8) des bobines de réseau (3) de la terre (7), annule le courant de court-circuit qui apparaît lors d'un court-circuit entre l'un des conducteurs (4) et la terre (7).

5. Procédé selon l'une des revendications 1 à 4,
   *caractérisé en ce que*
   qu'en cas de besoin, des tensions $U_s$ et $U_h$ supplémentaires sont injectées entre la terre (7) et les conducteurs (4) reliant deux transformateurs de réseau (2, 6) voisins, avec une phase telle que les déphasages des tensions $U_h$ et des tensions $U_s$ le long des conducteurs (4), par rapport aux tensions de phase $U_{hac}$ associées, sont limités.

6. Procédé selon l'une quelconque des revendications 1 à 5,
   *caractérisé en ce que*
   **en ce que** le réseau est triphasé, au moins un générateur $S_1$ (17) est connecté entre une connexion en étoile (8) des bobines de réseau (3) d'au moins un transformateur de réseau (2) et la terre (7), et les connexions en étoile (9) des bobines de réseau (5) des autres transformateurs de réseau (6) restent libres, ou sont mis à la terre avec respectivement une impédance terminale (18), et/ou trois tensions $U_s$ sont générées avec au moins un générateur $S_3$ (17) entre respectivement une bobine de réseau (3) d'au moins un transformateur de réseau (2) et le conducteur associé (4), les bornes en étoile (8) des bobines de réseau (2), qui sont reliées aux générateurs $S_3$, étant mises à la terre et les bornes en étoile (9) des bobines de réseau (5), qui ne sont pas reliées aux générateurs $S_3$ ou $S_1$, restant libres ou étant mises à la terre avec une impédance de terminaison (18) chacune, et un générateur $H_3$ (15, 16) génère trois tensions $U_h$, chacun de ces générateurs $H_3$ étant associé à chaque transformateur de réseau (2, 6) et étant connecté soit aux bobines d'entrée (1, 10), soit aux bobines de réseau (3, 5) des transformateurs de réseau (2, 6).

7. Procédé selon l'une quelconque des revendications 1 à 6,
   **caractérisé en ce que**
   le réseau HAC triphasé comprend au moins un transformateur de réseau (2) avec des bobines de réseau (3) commutées en -, qui sont raccordées aux bobines de terre (27) liées en Y d'un transformateur de terre (26), et soit la borne en étoile (28) des bobines de terre (27) est reliée à la terre (7) avec un générateur $S_1$ (17), soit un générateur $S_3$ est raccordé entre les bobines de terre (27) et la borne en étoile (28) mise à la terre.

8. Procédé selon l'une des revendications 1 à 7 pour un réseau HAC triphasé avec conducteurs aériens, constitué d'un premier système HAC triphasé (47) et d'un deuxième système HAC triphasé (48), qui sont parallèles dans l'espace, *caractérisé en ce que*
   **en ce que** les tensions de phase $U_{hac}$, les courants de phase $I_{ac}$ et les tensions conducteur-terre $U_{hle}$ du premier système HAC (47) sont dirigés en sens inverse des tensions de phase $U_{hac}$, des courants de phase $I_{ac}$ et des tensions $U_{hle}$ du deuxième système HAC (48), ce qui fait que les champs électriques générés par les tensions des deux systèmes HAC s'annulent partiellement à complètement et que les champs magnétiques générés par les courants de phase des deux systèmes HAC s'annulent partiellement à complètement.

9. Procédé pour augmenter la puissance d'un réseau AC monophasé selon l'une des revendications 1 à 5.
   *caractérisé en ce que*
   soit chaque transformateur de réseau monophasé (2, 6) est équipé de deux bobines de réseau identiques (34, 35, 36, 37) et est associé à un générateur simple $\Delta 1$ (13, 14) avec lequel une tension $\Delta U$ est injectée dans la bobine d'entrée (1) du transformateur de réseau (2) qui alimente le réseau, ainsi qu'avec un générateur $\Delta 1$ (14) respectif, la tension $\Delta U$ est découplée d'une bobine de sortie (10) respective du transformateur de réseau (6) chargé, ou avec un générateur $\Delta 2$ respectif, une tension $\Delta U$ est injectée dans une bobine de réseau (34, 35) respective du transformateur de réseau (2) d'alimentation, et avec un générateur $\Delta 2$ respectif, la tension $\Delta U$ est découplée d'une bobine de réseau (36, 37) respective d'un transformateur de réseau (2) chargé.

10. Installation pour la mise en œuvre du procédé selon l'une des revendications 1 à 8, *caractérisé en ce que*
    **en ce qu'**un transformateur triphasé HAC (55), qui transforme les tensions conducteur-terre $U_{hle}$ et les tensions de phase $U_{hac}$, est constitué d'un transformateur de réseau triphasé $\Delta$-Y ou Y-$\Delta$ (2), et d'un transformateur triphasé de mise à la terre (26), dont les bobines (27) relient les sorties des bobines de réseau -commutées (3) à la connexion en étoile (28), ainsi que d'un transformateur monophasé (52), la bobine d'entrée (53) du transformateur monophasé (52) étant connectée entre la connexion en étoile (8) et la terre (7) et la bobine de sortie (54) du transformateur monophasé (52) étant connectée entre la connexion en étoile (28) et la terre (7).

11. Installation pour la mise en œuvre du procédé selon l'une des revendications 1 à 8, *caractérisé en ce que*
    qu'il est prévu soit un onduleur triphasé (20) qui convertit la pleine puissance du réseau $P_{hac}$, ainsi que produit les tensions de phase $U_{hac}$, les tensions harmoniques $U_h$ et $U_s$, soit un générateur rotatif triphasé (62) qui fournit la pleine puissance du réseau Phac, ainsi que produit les tensions de phase $U_{hac}$ et les tensions harmoniques $U_h$ et $U_s$, un transformateur de réseau HAC triphasé (53) transforme les tensions $U_{hac}$, $U_h$ et $U_s$ des deux variantes et les conducteurs (4) relient un transformateur de réseau HAC (53) à un transformateur de réseau AC triphasé (6) monté en aval, un générateur $H_3$ (55) découplant les tensions $U_h$ avant les bobines d'entrée du transformateur de réseau AC (6) monté en aval.

12. Installation pour la mise en œuvre du procédé selon l'une des revendications 1 à 9, *caractérisé en ce que*
    qu'un câble de terre (49) est constitué d'un ou de plusieurs conducteurs (4), chaque conducteur (4) étant isolé par un isolateur (44) et blindé par un écran (45) mis à la terre.

13. Installation pour la mise en œuvre du procédé selon l'une des revendications 1 à 8, *caractérisé en ce que*
    que les bobines d'entrée (1) d'un transformateur de réseau triphasé (2) sont reliées aux bobines d'entrée (57) d'un transformateur d'extension triphasé (56), les bobines de réseau (58) du transformateur d'extension (56) sont raccordées à celles (3) du transformateur de réseau (2) et les tensions d'isolation du transformateur d'extension (56) sont inférieures ou égales aux tensions d'isolation du transformateur de réseau (3), les bobines de réseau (58) du transformateur d'extension sont montées entre les bobines de réseau (3) du transformateur de réseau (2) et une connexion en étoile (8), et un générateur $H_3$ (15) est connecté entre les bobines d'entrée (57) du transformateur d'extension (56) et les bobines d'entrée (1) du transformateur de réseau (2), et soit un générateur $S_1$ (17) est connecté entre la connexion étoile (8) et la terre (7), soit un générateur $S_3$ est

raccordé entre les bobines de réseau (58) du transformateur d'extension (56) et la connexion en étoile (8) mise à la terre, ainsi qu'une paire d'interrupteurs (60) qui court-circuite les bobines de réseau (58) du transformateur d'extension (56) en cas de défaut, et une paire d'interrupteurs (61) qui commande le générateur $S_1$ (17) ou le transformateur d'extension (56) en cas de défaut ou en cas de besoin, ce qui fait qu'en cas de défaut, les tensions $U_{hac}$ et $U_{hle}$ à la sortie de l'installation se réduisent aux tensions $U_{ac}$ et $U_{le}$, et que l'isolation du transformateur de réseau (2) et du transformateur d'extension (56) n'est donc pas surchargée en cas de défaut.

14. Installation pour la mise en œuvre du procédé selon l'une des revendications 1 à 8, *caractérisé en ce que*

qu'un transformateur de réseau triphasé (2) avec des bobines de réseau (3) commutées en - est raccordé à un autotransformateur triphasé (63) dont les bobines de réseau (65) transforment les tensions de phase Uac en tensions supérieures $U_{hac}$ et dont les bobines de terre (64) forment la connexion en étoile (8), un générateur $H_3$ (15) injecte les tensions $U_h$ correspondantes et un générateur $S_1$ (17) relie le point étoile (8) à la terre et injecte la tension $U_s$, sachant qu'en cas de défaut, la paire d'interrupteurs (60) court-circuite les générateurs $U_h$ et les bobines de réseau (65), la paire d'interrupteurs (61) ponte le générateur $U_s$ et le sectionneur (66) sépare le raccordement étoile (8) de la terre (7).

15. Installation selon l'une des revendications 13, 14 pour la mise en œuvre du procédé selon la revendication 9,
*caractérisé en ce que*
que le transformateur de réseau (2) et le transformateur d'extension (56) correspondant sont réalisés en monophasé, ou que le transformateur de réseau (2) et l'autotransformateur (63) correspondant sont réalisés en monophasé, et que dans les deux variantes de réalisation, soit un générateur $H_1$ (15) monophasé et un générateur $S_1$ (17), soit un générateur Ai sont utilisés, et que les paires de commutateurs (60, 61) ou le sectionneur (66) sont également réalisés en monophasé.

Figur 1

Figur 2

Figur 3

Figur 4

Figur 5

Figur 6

Figur 7

Figur 8

Figur 9

Figur 10

Figur 11

Figur 12

Figur 13

Figur 14

Figur 15

Figur 16

Figur 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3211914 A
- US 3970914 A
- DE 000001238094 A
- US 1363707 A

**In der Beschreibung aufgeführte Nicht-Patentliteratur**

- The Operation of Power Transmission. *Article IEE Transactions,* Februar 2017, vol. 32 (1
- The Operation of Power Transmission. *IEE Transactions,* vol. 32 (1
- The Operation of Power. *IEE Transactions,* Februar 2017, vol. 32 (1